# EUROPEAN PATENT APPLICATION

(11) **EP 4 404 604 A1**
(43) Date of publication of application: **24.07.2024**
(21) Application number: 21957019.9
(22) Date of filing: 14.09.2021
(51) Int. Cl.: H04W 8/24

(54) **USER EQUIPMENT (UE) CAPABILITY-BASED MODEL PROCESSING METHOD AND APPARATUS, UE, BASE STATION AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); MU, Qin, Beijing 100085 (CN); XIONG, Kexin, Beijing 100085 (CN)
(74) Representative: Hughes, Andrea Michelle
(86) International application number: PCT/CN2021/118334
(87) International publication number: WO 2023/039728

(57) **Abstract**

The present disclosure relates to the technical field of communications, and provides a user equipment (UE) capability-based model processing method and apparatus, a UE, a network device and a storage medium. The method comprises: sending a request message to a UE, the request message being used for requesting at least one UE hardware capability information, UE real-time capability information, and real-time demand information of the UE for a model; obtaining feedback information sent by the UE on the basis of the request message, the feedback information comprising information requested by the request message; and determining a model training scheme and/or a model reasoning scheme on the basis of the feedback information, to train the model on the basis of the model training scheme, and/or to perform reasoning on the model on the basis of the model reasoning scheme. The method provided in the present disclosure ensures the efficiency of model training and/or model reasoning, is high in flexibility, and does not affect the normal operation of other services of the UE.

## Description

### TECHNICAL FIELD

The disclosure relates to the field of communication technologies, and in particular to model processing methods, apparatuses, user equipment (UE), a base station, and a storage medium based on a UE capability.

### BACKGROUND

In the 5G communication network, in order to ensure the privacy and security of users and alleviate the computing pressure and storage space of the server, the model training/model inference tasks are usually deployed locally on user equipment (UE), and the model training/model inference is performed by the UE.

In related arts, the base station usually determines, based on a UE hardware capability, whether the UE has a capability of model training/model inference. When the UE has this capability, the base station will instruct the UE to complete the task of model training/model inference; otherwise, the base station will complete the task of the model training/model inference.

However, in the related arts, the UE capability changes dynamically in real time, and at the same time, a requirement of the UE for model training/model inference will also change dynamically in real time. If the configuration of the model training/model inference is only based on the UE hardware capability, it may cause that the configuration of model training/model inference does not match the UE capability or the requirement of the UE for model training/model inference, resulting in low efficiency of model training/model inference and affecting the normal operation of other services of the UE. In addition, in the related arts, it is considered to only deploy the model training/model inference tasks on the UE side or only deploy the model training/model inference tasks on the base station side, which has low flexibility and cannot schedule the computing power of the UE and the base station to the greatest extent.

### SUMMARY

The disclosure provides model processing methods, apparatuses, user equipment (UE), network side device and storage medium based on a UE capability to solve the technical problem that existing measurement methods tend to cause power consumption and increase power consumption.

According to one aspect of embodiments of the disclosure, the model processing method based on a UE capability, performed by a base station, includes:
sending a request message to the UE, in which the request message is configured to be used for requesting at least one of UE hardware capability information, real-time UE capability information, or real-time UE requirement information for a model;
acquiring feedback information sent, based on the request message, by the UE, in which the feedback information includes information requested by the request message; and
determining a model training scheme and/or a model inference scheme based on the feedback information, to train the model based on the model training scheme and/or perform an inference on the model based on the model inference scheme.

According to another aspect of embodiments of the disclosure, the model processing method based on a UE capability, performed by the UE, includes:
obtaining a request message sent by a base station, in which the request message is configured to be used for requesting at least one of UE hardware capability information, real-time UE capability information, or real-time UE requirement information for a model; and
sending, based on the request message, feedback information to the base station, in which the feedback information is information requested by the request message.

According to yet another aspect of embodiments of the disclosure, a model processing apparatus based on a UE capability includes:
a sending module, configured to send a request message to a UE, in which the request message is configured to be used for requesting at least one of UE hardware capability information, real-time UE capability information, or real-time UE requirement information for a model;
an acquiring module, configured to acquire feedback information sent, based on the request message, by the UE, in which the feedback information includes information requested by the request message; and
a processing module, configured to determine a model training scheme and/or a model inference scheme based on the feedback information, to train the model based on the model training scheme and/or to perform an inference on the model based on the model inference scheme.

According to yet another aspect of embodiments of the disclosure, a model processing apparatus based on a UE capability includes:
an acquisition module, configured to acquire a request message sent by the base station, in which the request message is configured to be used for requesting at least one of UE hardware capability information, real-time UE capability information, or real-time UE requirement information for a model; and
a sending module, configured to send feedback information to the base station based on the request message, in which the feedback information is information requested by the request message.

According to yet another aspect of embodiments of the disclosure, a communication device includes a processor and a memory. The memory has a computer program stored thereon, and the processor is configured, when executing the computer program stored on the memory, to perform the method according to the embodiment of the one aspect.

According to yet another aspect of embodiments of the disclosure, a communication device includes a processor and a memory. The memory has a computer program stored thereon, and the processor is configured, when executing the computer program stored on the memory, to perform the method according to the embodiment of another aspect.

According to yet another aspect of embodiments of the disclosure, a communication device includes: a processor and an interface circuit.

The interface circuit is configured to receive code instructions and transmit the code instructions to the processor.

The processor is configured to run the code instructions to perform the method according to the embodiment of the one aspect.

According to yet another aspect of embodiments of the disclosure, a communication device includes: a processor and an interface circuit.

The interface circuit is configured to receive code instructions and transmit the code instructions to the processor.

The processor is configured to run the code instructions to perform the method according to the embodiment of another aspect.

According to yet another aspect of embodiments of the disclosure, a computer-readable storage medium has instructions stored thereon. When the instructions are executed, the method according to embodiment of the one aspect is performed.

According to yet another aspect of embodiments of the disclosure, a computer-readable storage medium has instructions stored thereon. When the instructions are executed, the method according to embodiment of another aspect is performed.

In conclusion, with the model processing methods, apparatuses, UE, base station and storage medium based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

### BRIEF DESCRIPTION OF THE DRAWINGS

The above and/or additional aspects and advantages of the disclosure will become apparent and understandable from the following description of embodiments in conjunction with the accompanying drawings.
FIG. 1 is a schematic flowchart illustrating a model processing method based on a user equipment (UE) capability according to an embodiment of the disclosure.
FIG. 2A is a schematic flowchart illustrating a model processing method based on a UE capability according to another embodiment of the disclosure.
FIG. 2B is a schematic diagram of reporting, by the UE, hardware information through UE Capability according to an embodiment of the disclosure.
FIG. 3A is a schematic flowchart illustrating a model processing method based on a UE capability according to yet another embodiment of the disclosure.
FIG. 3B is a flowchart illustrating interaction between a base station and a UE when the base station requests real-time UE capability information and/or real-time UE requirement information for a model according to embodiments of the disclosure.
FIG. 3C is a flowchart illustrating interaction between a base station and a UE based on Radio Resource Control (RRC) signaling when the base station requests real-time UE capability information and/or real-time UE requirement information for a model according to embodiments of the disclosure.
FIG. 3D is a flowchart illustrating interaction between a base station and a UE based on the Physical Uplink Control Channel (PUCCH) when the base station requests real-time UE capability information and/or real-time UE requirement information for a model according to embodiments of the disclosure.
FIG. 3E is a flowchart illustrating interaction between a base station and a UE based on Medium Access Control-Control Element (MAC CE) signaling when the base station requests real-time UE capability information and/or real-time UE requirement information for a model according to embodiments of the disclosure.
FIG. 4A is a schematic flowchart illustrating a model processing method based on a UE capability according to yet another embodiment of the disclosure.
FIG. 4B is a flowchart illustrating interaction between a UE and a base station when the base station trains a first model according to embodiments of the disclosure.
FIG. 5A is a schematic flowchart illustrating a model processing method based on a UE capability according to yet another embodiment of the disclosure.
Fig. 5B is a flowchart illustrating interaction between a UE and a base station when the base station and the UE respectively train a first model according to embodiments of the disclosure.
FIG. 6A is a schematic flowchart illustrating a model processing method based on a UE capability according to yet another embodiment of the disclosure.
FIG. 6B is a flowchart illustrating interaction between a UE and a base station when the UE trains a first model according to embodiments of the disclosure.
FIG. 7A is a schematic flowchart illustrating a model processing method based on a UE capability according to yet another embodiment of the disclosure.
FIG. 7B is a flowchart illustrating interaction between a UE and a base station when the base station perform an inference on a second model according to embodiments of the disclosure.
FIG. 8A is a schematic flowchart illustrating a model processing method based on a UE capability according to yet another embodiment of the disclosure.
FIG. 8B is a flowchart illustrating interaction between a UE and a base station when the base station and the UE jointly perform an inference on a second model according to embodiments of the disclosure.
FIG. 9A is a schematic flowchart illustrating a model processing method based on a UE capability according to yet another embodiment of the disclosure.
FIG. 9B is a flowchart illustrating interaction between a UE and a base station when the UE performs inference on a second model according to embodiments of the disclosure.
FIG. 10 is a schematic flowchart illustrating a model processing method based on a UE capability according to yet another embodiment of the disclosure.
FIG. 11 is a schematic flowchart illustrating a model processing method based on a UE capability according to yet another embodiment of the disclosure.
FIG. 12 is a schematic flowchart illustrating a model processing method based on a UE capability according to yet another embodiment of the disclosure.
FIG. 13 is a schematic flowchart illustrating a model processing method based on a UE capability according to yet another embodiment of the disclosure.
FIG. 14 is a schematic flowchart illustrating a model processing method based on a UE capability according to yet another embodiment of the disclosure.
FIG. 15 is a schematic flowchart illustrating a model processing method based on a UE capability according to yet another embodiment of the disclosure.
FIG. 16 is a schematic flowchart illustrating a model processing method based on a UE capability according to yet another embodiment of the disclosure.
FIG. 17 is a schematic flowchart illustrating a model processing method based on a UE capability according to yet another embodiment of the disclosure.
FIG. 18 is a schematic flowchart illustrating a model processing method based on a UE capability according to yet another embodiment of the disclosure.
FIG. 19 is a schematic diagram illustrating a model processing apparatus based on a UE capability according to an embodiment of the disclosure.
FIG. 20 is a schematic diagram illustrating a model processing apparatus based on a UE capability according to another embodiment of the disclosure.
FIG. 21 is a block diagram illustrating UE according to an embodiment of the disclosure.
FIG. 22 is a block diagram illustrating a base station according to an embodiment of the disclosure.

### DETAILED DESCRIPTION

Reference will now be made in detail to embodiments, examples of which are illustrated in the accompanying drawings. When the following description refers to the accompanying drawings, the same numerals in different drawings refer to the same or similar elements unless otherwise indicated. The implementations described in following embodiments do not represent all implementations consistent with embodiments of the disclosure. Rather, they are merely examples of apparatuses and methods consistent with aspects of disclosed embodiments as recited in the appended claims.

Terms used in embodiments of the disclosure are for the purpose of describing specific embodiments only, and are not intended to limit embodiments of the disclosure. As used in the examples of this disclosure and the appended claims, the singular forms "a" and "the" are also intended to include the plural unless the context clearly dictates otherwise. It is understandable that the term "and/or" as used herein refers to and includes any and all possible combinations of one or more of the associated listed items.

It is understandable that although embodiments of the disclosure may use the terms "first", "second", "third", etc. to describe various information, the information should not be limited to these terms. These terms are only used to distinguish information of the same type from one another. For example, without departing from the scope of embodiments of the disclosure, first information may also be called second information, and similarly, second information may also be called first information. Depending on the context, the words "if' as used herein may be interpreted as "at" or "when" or "in response to determining."

The model processing methods, apparatuses, user equipment (UE), network side device, and storage medium based on a UE capability according to embodiments of the disclosure will be described in detail below with reference to the accompanying drawings.

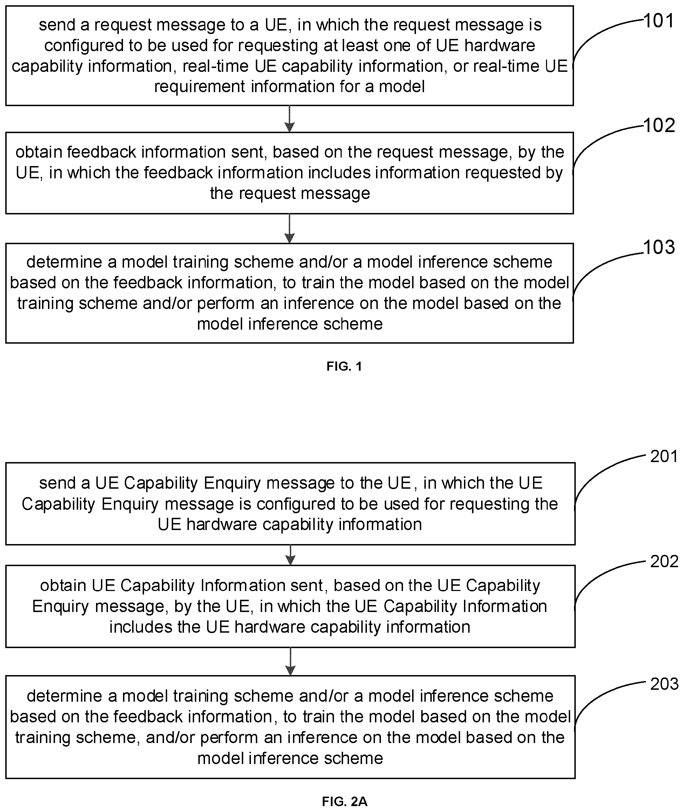

FIG. 1 is a schematic flowchart illustrating a model processing method based on a UE capability according to an embodiment of the disclosure. The method is performed by a base station. As illustrated in FIG. 1, the model processing method may include the following.

At block 101, a request message is sent to a UE, in which the request message is configured to be used for requesting at least one of UE hardware capability information, real-time UE capability information, or real-time UE requirement information for a model.

It is noteworthy that the method according to embodiments of the disclosure may be performed by any UE. UE may be a device that provides voice and/or data connectivity to a user. UE can communicate with one or more core networks via Radio Access Network (RAN). UE may be an Internet of Things (IoT) terminal, such as a sensor device or a mobile phone (or called a "cellular" phone) or a computer having an loT terminal, such as a fixed, portable, pocket, hand-held, computer-built-in or vehicle-mounted device. For example, Station (STA), subscriber unit, subscriber station, mobile station, mobile, remote station, access point, remote terminal, access terminal, user terminal, or user agent. Or, the UE may be a device of an unmanned aerial vehicle. Or, the UE may be a vehicle-mounted device, such as a trip computer with a wireless communication function or a wireless terminal connected externally to the trip computer. Or, the UE may be a roadside device, such as a street lamp, a signal lamp, or other roadside devices with a wireless communication function.

In an embodiment of the disclosure, the UE hardware capability information may be configured to represent information on whether the UE has a hard condition to complete the model training and/or the model inference. The UE hardware capability information may include at least one of the following:
the number of Central Processing Units (CPUs) of the UE;
the number of Graphics Processing Units (GPUs) which are display cores of the UE;
a clock rate of a CPU of the UE;
a clock rate of a GPU of the UE;
a cache capacity of the CPU of the UE;
a video memory capacity of the GPU of the UE;
a Tera Operations Per Second (TOPS) of the UE; or
a Floating-point Operations Per Second (FLOPS) of the UE.

In one embodiment of the disclosure, the real-time UE capability information may be used for reflecting whether the UE has sufficient computing power and quantity of electricity to complete the model training task and/or model inference task and reflecting whether the normal operation of other services of the UE will be affected by performing the model training task and/or the model inference task. The UE real-time capability information may include at least one of the following:
real-time computing power information of UE; or
real-time energy consumption information of UE.

In one embodiment of the disclosure, the real-time computing power information of the UE may include at least one of a real-time memory occupancy rate of the UE, a real-time CPU occupancy rate of the UE, a real-time GPU occupancy rate of the UE, or a real-time computing speed of the UE. The real-time energy consumption information of the UE may include at least one of a remaining quantity of electricity of the UE or an activation status of a power saving mode of the UE.

In one embodiment of the disclosure, the real-time UE requirement information for a model may be used for reflecting the requirement of the UE for a training result and/or an inference result and a privacy requirement. The real-time UE requirement information for the model may include at least one of the following:
a requirement for a precision of the model;
a requirement for a model inference latency; or
a requirement for a privacy of model data.

In one embodiment of the disclosure, the requirement for the privacy of the model data may include information on whether the UE is allowed to report the model data of a UE side. In one embodiment of the disclosure, the above-mentioned "model data" may include at least one of model training data, model inference data, or model inference intermediate information.

It is noteworthy that, in one embodiment of the disclosure, the above-mentioned "model inference intermediate information" may be intermediate information generated during a process of the model inference In one embodiment of the disclosure, the model used for inferring includes at least one layer of sub-models connected sequentially, and the model inference intermediate information may be information outputted by a sub-model of an intermediate layer (such as a sub-model of a layer from a second layer to a penultimate layer).

Further, in one embodiment of the disclosure, when types of information requested by the base station from the UE are different, requesting manners (that is, manners in which the base station sends a request message to the UE) are also different. In one embodiment of the disclosure, the way the base station requests the UE hardware capability information is different from the way the base station requests the real-time UE capability information and/or the real-time UE requirement information for a model. The ways the base station requests the UE hardware capability information, the real-time UE capability information, and the real-time UE requirement information for a model will be described in detail in subsequent embodiments.

At block 102, feedback information sent, based on the request message, by the UE is obtained, in which the feedback information includes information requested by the request message.

In one embodiment of the disclosure, when the base station adopts different ways to request different types of information, ways for the base station to obtain the feedback information sent by the UE in this block 102 will also be different. The way in which the base station obtains the feedback information sent by the UE will be described in subsequent embodiments.

At block 103, a model training scheme and/or a model inference scheme is determined based on the feedback information, to train the model based on the model training scheme and/or perform an inference on the model based on the model inference scheme.

In one embodiment of the disclosure, after the base station obtains the feedback information, the base station may determine the model training capability of the UE and/or the model inference capability of the UE base on the specific content included in the feedback information (such as the UE hardware capability information, the real-time UE computing power information, or the real-time UE power consumption information), determine the model training scheme based on the model training capability of the UE, and determine the model inference scheme based on the model inference capability of the UE, such that subsequently, the model may be trained based on the model training scheme and/or the inference may be performed on the model based on the model inference scheme.

In one embodiment of the disclosure, the model training scheme and/or the model inference scheme may be applied in an Artificial Intelligence (Al) field. In another embodiment of the disclosure, the model training scheme and/or the model inference scheme may be applied in a Machine Learning (ML) field.

In conclusion, in the model processing method based on the UE capability according to the disclosure, the base station may send the request message to the UE to request at least one of the UE hardware capability information, the real-time UE capability information, or the real-time UE requirement information for the model. Then, the base station may obtain the feedback information sent by the UE. The feedback information includes the information requested by the request message. The base station may determine the model training scheme and/or model inference scheme based on the feedback information, to train the model based on the model training scheme and/or perform the inference on the model based on the model inference scheme. It may be seen that, in embodiments of the present disclosure, in determining the model training scheme and/or the model inference scheme, the base station may comprehensively determine the current model training capability and model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference". Therefore, the efficiency of model training and/or model inference is ensured without affecting the normal operation of other services of the UE.

FIG. 2A is a schematic flowchart illustrating a model processing method based on a UE capability according to embodiments of the disclosure. The method is performed by a base station. As illustrated in FIG. 2A, the model processing method may include the following.

At block 201, a UE Capability Enquiry message is sent to the UE.

Embodiments related to FIG. 2A mainly introduce ways in which the base station requests the UE hardware capability information from the UE. In one embodiment of the disclosure, the way in which the base station requests the UE hardware capability information from the UE may be: sending the UE Capability Enquiry message to the UE to request the UE hardware capability information.

At block 202, UE Capability Information sent, based on the UE Capability Enquiry message, by the UE is obtained, in which the UE Capability Information includes UE hardware capability information.

At block 203, a model training scheme and/or a model inference scheme is determined based on the feedback information, to train the model based on the model training scheme, and/or perform an inference on the model based on the model inference scheme.

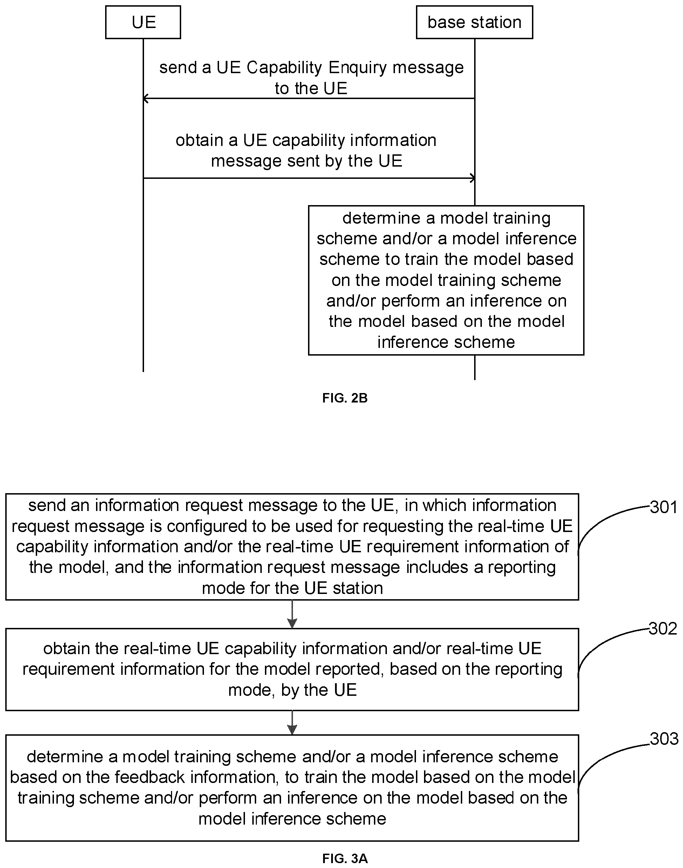

FIG. 2B is a flowchart illustrating an interaction between the base station and the UE when the base station requests the UE hardware capability information according to an embodiment of the disclosure. As illustrated in FIG. 2B, the base station may first send a UE Capability Enquiry message to the UE to request the UE hardware capability information, and then the UE sends a UE capability information message to the base station based on the UE Capability Enquiry message. The UE capability information message includes the UE hardware capability information. The base station may subsequently assess the capability of the UE based on the UE hardware capability information in the UE capability information message, to determine the model training scheme and/or the model inference scheme.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

FIG. 3A is a schematic flowchart illustrating a model processing method based on a UE capability according to an embodiment of the disclosure. The method is performed by a base station. As illustrated in FIG. 3A, the model processing method based on the UE capability may include the following.

At block 301, an information request message is sent to the UE.

Embodiments related to FIG. 3A mainly introduce the way in which the base station requests, from the UE, the real-time capability information and/or the real-time UE requirement information for the model. In one embodiment of the disclosure, the way in which the base station requests the real-time UE capability information and/or the real-time UE requirement information for the model from the UE may be: sending an information request message to the UE for requesting the real-time UE capability information and/or the real-time UE requirement information of the model, such that subsequently, the UE may send, based on the information request message, the real-time UE capability information and/or the real-time UE requirement information for the model to the base station.

In one embodiment of the disclosure, the information request message may be configured to be used for requesting only the real-time UE capability information. In another embodiment of the disclosure, the information request message may be configured to be used for requesting only the real-time UE requirement information for the model. In another embodiment of the disclosure, the information request message may be configured to be used for requesting both the real-time UE capability information and the real-time UE requirement information for the model.

Further, in one embodiment of the disclosure, the information request message may also include a reporting mode for the UE. The reporting mode is a way in which the UE reports the real-time UE capability information and/or the real-time UE requirement information for the model to the base station.

In one embodiment of the disclosure, the reporting mode may include at least one of:
periodic reporting;
semi-persistent reporting; or
trigger-based reporting.

In one embodiment of the disclosure, the periodic reporting may include: reporting the real-time UE capability information and/or the real-time UE requirement information for the model to the base station in each reporting period. In one embodiment of the disclosure, the reporting period may be configured by the base station to the UE through Radio Resource Control (RRC) signaling.

For example, in one embodiment of the disclosure, assuming that the reporting period is 10 milliseconds (ms), the UE may report, to the base station, the real-time UE capability information and/or the real-time UE requirement information for the model that are requested by the base station every 10 ms.

In one embodiment of the disclosure, the aforementioned "semi-persistent reporting" may include that: when the UE meets a reporting condition corresponding to the semi-persistent reporting, the UE reports the real-time UE capability information and/or the real-time UE requirement information for the model to the base station. In one embodiment of the disclosure, the reporting condition may be that, when an amount of a change between data of certain information at a current time and data of the certain information at a last reporting time exceeds a first variable threshold, the data corresponding to the certain information is reported to the base station. It is noteworthy that, each information corresponds to a respective first variable threshold and the respective first variable thresholds corresponding to the information may be the same or different. In one embodiment of the disclosure, when the UE reports information to the base station in a semi-persistent reporting manner, a detection cycle may be configured for the UE in advance. In each detection cycle, it may be detected whether the UE meets the above reporting condition. When the reporting condition is met, the information is reported. When the reporting condition is not met, the information is not reported. In one embodiment of the disclosure, the detection cycle and the respective first variable threshold corresponding to each information may be configured by the base station for the UE through the RRC signaling.

For example, in one embodiment of the disclosure, assuming that the first variable threshold corresponding to the remaining quantity of electricity of the UE in the real-time UE capability information is 10%, the remaining quantity of electricity of the UE is 80% at the last reporting time, and the detection cycle is 10 minutes (min), the UE may detect the remaining quantity of electricity of the UE every 10 minutes and report the remaining quantity of electricity of the UE to the base station when detecting that the remaining quantity of electricity of the UE is less than or equal to 70%.

Further, in one embodiment of the disclosure, the aforementioned "trigger-based reporting" may include that: when the UE satisfies a trigger condition corresponding to the trigger-based reporting, the UE reports the real-time UE capability information and/or the real-time UE requirement information for the model. In one embodiment of the disclosure, the trigger-based condition may include at least one of:
when an amount of a change between data of a certain information at a current time and data of the certain information at a last reporting time exceeds a second variable threshold, reporting the data corresponding to the information to the base station;
when data of certain information at a current time exceeds/is below a first data threshold, the data corresponding to the information is reported to the base station.

It is noteworthy that, in one embodiment of the disclosure, each information may correspond to a respective trigger condition and respective trigger conditions corresponding to different information may be the same or different. In one embodiment of the disclosure, each information may correspond to a respective second variable threshold and/or a respective first data threshold, respective second variable thresholds corresponding to different information may be the same or different, and respective first data thresholds corresponding to different information may be the same or different. Further, in one embodiment of the disclosure, the respective trigger condition corresponding to each information may be configured by the base station for the UE through the RRC signaling. Meanwhile, in one embodiment of the disclosure, the respective second variable threshold and/or the respective first data threshold corresponding to each information may be configured by the base station for the UE through the RRC signaling.

For example, in one embodiment of the disclosure, assuming that the trigger condition corresponding to the remaining quantity of electricity of the UE in the real-time UE capability information is that: when the remaining quantity of electricity of the UE is lower than 30%, the remaining quantity of electricity of the UE is reported to the base station. Therefore, the UE may detect its remaining quantity of electricity in real time, and may trigger to report the remaining quantity of electricity of the UE when detecting that the remaining quantity of electricity of the UE is lower than 30%.

In addition, it is noteworthy, in one embodiment of the disclosure, the above-mentioned "first variable threshold" and the "second variable threshold" may be the same. In another embodiment of the disclosure, the above-mentioned "first variable threshold" and the "second variable threshold" may be different.

Based on the above content, it can be seen that in one embodiment of the disclosure, when the reporting mode included in the above "information request information" is the periodic reporting, the base station also needs to send the reporting period corresponding to the periodic reporting to the UE (for example, the reporting period is reported through the RRC signaling).

In one embodiment of the disclosure, when the reporting mode included in the above information request information is the semi-persistent reporting, the base station also needs to send the reporting condition corresponding to the semi-persistent reporting to the UE (for example, the reporting condition may be sent through the RRC signaling).

In one embodiment of the disclosure, when the reporting mode included in the above information request information is the trigger-based reporting, the base station also needs to send the trigger condition corresponding to the trigger-based reporting to the UE (for example, the trigger condition may be sent through the RRC signaling).

At block 302, the real-time UE capability information and/or real-time UE requirement information for the model reported, based on the reporting mode, by the UE are obtained.

In one embodiment of the disclosure, the information reported by the UE to the base station is mainly the information requested by the base station in the block 301. In detail, in one embodiment of the disclosure, when the base station only requests the real-time UE capability information from the UE in the block 301, the UE may report only the real-time UE capability information to the base station in the block 302. In another embodiment of the disclosure, when the base station requests only the real-time UE requirement information for the model from the UE in the block 301, the UE may report only the real-time UE requirement information for the model to the base station in the block 302. In another embodiment of the disclosure, when the base station requests both the real-time UE capability information and the real-time UE requirement information for the model from the UE in the block 301, the UE may report both the real-time UE capability information and the real-time UE requirement information for the model to the base station in the block 302.

In one embodiment of the disclosure, when the UE reports the real-time UE capability information and/or the real-time UE requirement information for the model to the base station, the real-time UE capability information and/or the real-time UE requirement information for the model are reported based on the reporting mode in the information request message in the block 301 above. For example, in one embodiment of the disclosure, when the reporting mode in the information request message in the block 301 is the periodic reporting, the base station may obtain the real-time UE capability information and /or the real-time UE requirement information for the model periodically reported by the UE.

Further, in one embodiment of the disclosure, when the UE reports the real-time UE capability information and/or the real-time UE requirement information for the model, the real-time UE capability information and/or the real-time UE requirement information for the model may be reported by adopting an incremental reporting manner.

In one embodiment of the disclosure, the incremental reporting manner is specifically: each reporting reports only information that has changed from the previous reporting, which may save signaling overhead. For example, in one embodiment of the disclosure, when the base station requests the UE to report the real-time UE capability information, if only the real-time memory occupancy rate of the UE and the remaining quantity of electricity of the UE in the real-time UE capability information have changed compared with the real-time UE capability information at the last reporting time, then the UE may report only the real-time memory occupancy rate of the UE and the remaining quantity of electricity of the UE to the base station at the current time.

It is noteworthy that, in one embodiment of the disclosure, different information included in the UE hardware capability information corresponds to different privacy levels, and/or different information included in the real-time UE capability information corresponds to different privacy levels, and/or different information included in the real-time UE requirement information for the model corresponds to different privacy levels.

On this basis, in one embodiment of the disclosure, the method for the base station to obtain the real-time UE capability information and/or the real-time UE requirement information for the model reported, based on the reporting mode, by the UE may include: when the UE obtains the information request message sent by the base station in the block 301, the UE may determine a predetermined privacy level. In one embodiment of the disclosure, the predetermined privacy level may be determined by the UE. In another embodiment of the disclosure, the predetermined privacy level may be set in the UE by the user. Afterwards, the UE finds the information whose privacy level is equal to or lower than the predetermined privacy level from the real-time UE capability information requested by the base station and reports the found information to the base station based on the reporting mode, and/or, the UE finds the information whose privacy level is equal to or lower than the predetermined privacy level from the real-time UE requirement information for the model requested by the base station and reports the found information to the base station based on the reporting mode, so that the base station may obtain the information whose privacy level is lower than or equal to the predetermined privacy level among the real-time UE capability information reported, based on the reporting mode, by the UE and obtain the information whose privacy level is equal to or lower than the predetermined privacy level among the real-time UE requirement information for the model reported, based on the reporting mode, by the UE.

For example, in one embodiment of the disclosure, assuming that privacy levels corresponding to the real-time memory occupancy rate of the UE, the real-time CPU occupancy rate of the UE, and the real-time GPU occupancy rate of the UE in the real-time UE capability information are all first levels; privacy levels corresponding to the real-time computing speed and the remaining quantity of electricity of the UE are all second levels; the privacy level corresponding to the activation status of the power saving mode of the UE is a third level; and the predetermined privacy level is the second level. If the base station requests the real-time UE capability information from the UE, the UE may report, to the base station, only the information whose privacy level is the first level and the second level among the real-time UE capability information. That is, the UE reports only the real-time memory occupancy rate of the UE, the real-time CPU occupancy rate of the UE, the real-time GPU occupancy rate of the UE, the real-time computing speed of the UE, and the remaining quantity of electricity of the UE to the base station.

It can be seen that in embodiments of the disclosure, in reporting the real-time UE capability information and/or the real-time UE requirement information for the model, the UE will report only the information that meets the privacy level, so that the process of reporting information is more accurate and secure.

Further, it is noteworthy that, in one embodiment of the disclosure, the method for the base station to obtain the real-time UE capability information and/or the real-time UE requirement information for the model reported, based on the reporting mode, by the UE may include at least one of:
obtaining the real-time UE capability information and/or the real-time UE requirement information for the model reported, through RRC signaling, by the UE;
obtaining the real-time UE capability information and/or the real-time UE requirement information for the model reported, through MAC CE signaling, by the UE; or
obtaining the real-time UE capability information and/or the real-time UE requirement information for the model reported, through a PUCCH, by the UE.

In one embodiment of the disclosure, the method for the base station to obtain the real-time UE capability information and/or the real-time UE requirement information for the model reported, through the PUCCH, by the UE may include the following steps 1 to 3
In step 1, a report information list sent by the UE is obtained. The report information list is configured to indicate all information (such as the information whose privacy level is equal to or lower than the predetermined privacy level) that the UE can report to the base station among the real-time UE capability information and/or the real-time UE requirement information for the model requested by the base station.
In step 2, a PUCCH is configured for the UE.
In step 3, the real-time UE capability information and/or the real-time UE requirement information for the model sent by the UE are obtained through the configured PUCCH.

In one embodiment of the disclosure, the method for configuring the PUCCH for the UE in the step 2 above includes at least one of:
configuring the PUCCH for the UE in a semi-static resource allocation manner; or
configuring the PUCCH for the UE in a dynamic resource allocation manner.

In detail, in one embodiment of the disclosure, the semi-static resource allocation manner may include that: the base station configures, through the RRC signaling for the UE, a PUCCH resource for reporting the real-time UE capability information and/or the real-time UE requirement information for the model At the same time, the base station configures the period and the period offset of the PUCCH resource for the UE, such that the UE uses the PUCCH based on the configured period and the configured period offset, to send the real-time UE capability information and/or the real-time UE requirement information for the model to the base station.

In another embodiment of the disclosure, the dynamic resource allocation manner may include that: the base station configures, through the RRC signaling for the UE, a PUCCH resource set including at least one PUCCH resource; and every time when the base station requests the real-time UE capability information and/or the real-time UE requirement information for the model, the base station may indicate in advance, through Downlink Control Information (DCI) signaling, which PUCCH resource in the PUCCH resource set is specifically used for reporting the real-time UE capability information and/or the real-time UE requirement information of the model. Therefore, the UE may use the corresponding PUCCH resource to report the real-time UE capability information and/or the real-time UE requirement information for the model based on the indication of the DCI from the base station.

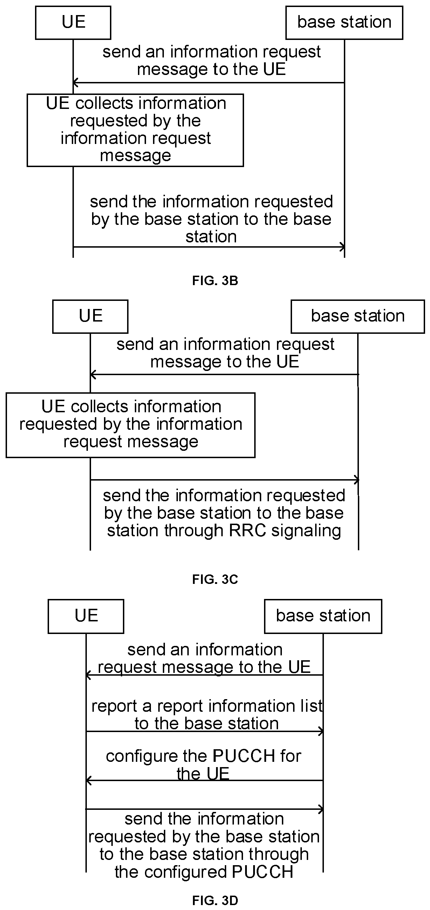

Further, FIG. 3B is a flowchart illustrating an interaction between the base station and the UE when the base station requests the real-time UE capability information and/or the real-time UE requirement information for the model according to an embodiment of the disclosure. As illustrated in FIG. 3B, the base station may send an information request message to the UE to request the real-time UE capability information and/or the real-time UE requirement information for the model, and then the UE may collect the information requested by the base station based on the information request message sent by the base station and send the information requested by the base station to the base station.

FIG. 3C is a flowchart illustrating an interaction between the base station and the UE based on RRC signaling when the base station requests the real-time EU capability information and/or the real-time UE requirement information for the model according to an embodiment of the disclosure. As illustrated in FIG. 3C, the base station sends an information request message to the UE to request the real-time UE capability information and/or the real-time UE requirement information for the model, and then the UE may collect the information requested by the base station based on the information request message sent by the base station and send the information requested by the base station to the base station through the RRC signaling.

FIG. 3D is a flowchart illustrating an interaction between the base station and the UE based on the PUCCH when the base station requests the real-time UE capability information and/or the real-time UE requirement information for the model according to an embodiment of the disclosure. As illustrated in FIG. 3D, the base station may send an information request message to the UE to request the real-time UE capability information and/or the real-time UE requirement information for the model, and then the UE may send a report information list to the base station. The base station may configure the PUCCH for the UE and the UE may send the information requested by the base station to the base station through the configured PUCCH.

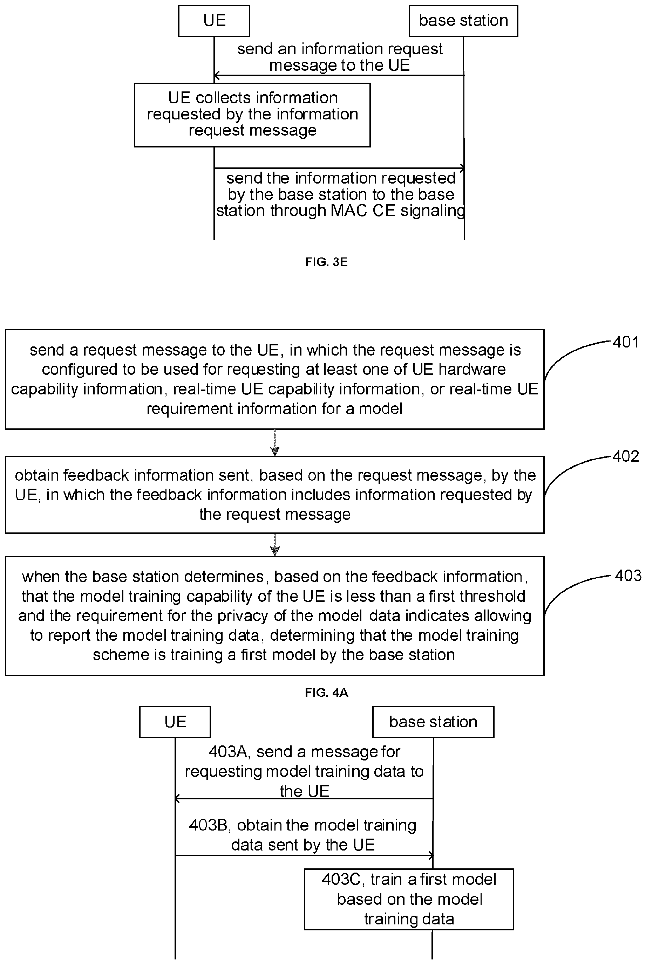

FIG. 3E is a flowchart illustrating an interaction between the base station and the UE based on MAC CE signaling when the base station requests the real-time UE capability information and/or the real-time UE requirement information for the model according to an embodiment of the disclosure. As illustrated in FIG. 3E, the base station may send an information request message to the UE to request the real-time UE capability information and/or the real-time UE requirement information for the model, and then the UE may collect the information requested by the base station based on the information request message sent by the base station and send the information requested by the base station to the base station through the MAC CE signaling.

In block 303, a model training scheme and/or a model inference scheme is determined based on the feedback information, to train the model based on the model training scheme and/or perform an inference on the model based on the model inference scheme.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

FIG. 4A is a schematic flowchart illustrating a model processing method based on a UE capability according to an embodiment of the disclosure. The method is performed by a base station. As illustrated in FIG. 4A, the model processing method based on the UE capability may include the following.

In block 401, a request message is sent to the UE. The request message is configured to be used for requesting at least one of UE hardware capability information, real-time UE capability information, or real-time UE requirement information for a model.

In block 402, feedback information sent, based on the request message, by the UE is obtained. The feedback information includes information requested by the request message.

Introductions of blocks 401-402 may make reference descriptions of foregoing embodiments, which are not repeated in embodiments of the disclosure.

In block 403, when the base station determines, based on the feedback information, that the model training capability of the UE is less than a first threshold and the requirement for the privacy of the model data indicates allowing to report the model training data, it is determined that the model training scheme is training a first model by the base station.

In one embodiment of the disclosure, the first threshold may be preset, and when the base station determines that the model training capability of the UE is less than the first threshold, it may be considered that the current model training capability of the UE is too low to complete the model training. Therefore, in order to ensure that the model training is performed efficiently, the first model is trained by the base station.

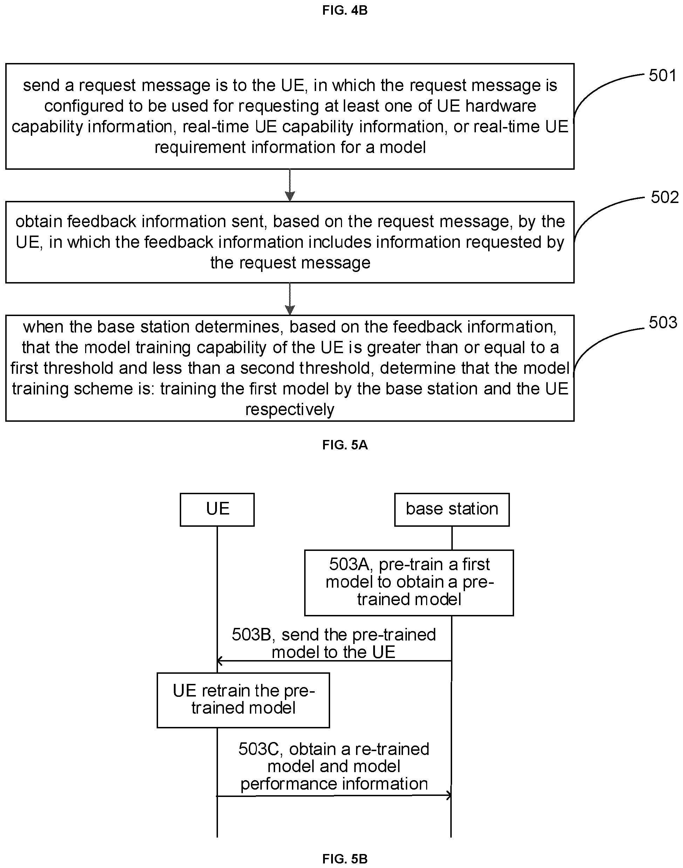

FIG. 4B is a flowchart illustrating an interaction between the UE and the base station when the base station trains the first model according to an embodiment of the disclosure. As illustrated in FIG. 4B, the method for the base station to train the first model may include the following.

At block 403A, a message for requesting model training data is sent to the UE.

It is noteworthy that, in one embodiment of the disclosure, the prerequisite for the base station to train the first model is: allowing the UE to report the model training data to the base station, such that the base station may obtain the model training data of the UE side, to complete the subsequent steps of the model training.

At block 403B, the model training data sent by the UE is obtained.

At block 403C, the first model is trained based on the model training data.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

FIG. 5 is a schematic flowchart illustrating a model processing method based on a UE capability according to an embodiment of the disclosure. The method is performed by a base station. As illustrated in FIG. 5, the model processing method based on the UE capability may include the following.

At block 501, a request message is sent to the UE. The the request message is configured to be used for requesting at least one of UE hardware capability information, real-time UE capability information, or real-time UE requirement information for a model.

At block 502, feedback information sent, based on the request message, by the UE is obtained. The feedback information includes information requested by the request message.

Introductions of blocks 501-502 may make reference to the descriptions of foregoing embodiments, which are not repeated in embodiments of the disclosure.

At block 503, when the base station determines, based on the feedback information, that the model training capability of the UE is greater than or equal to a first threshold and less than a second threshold, it is determined that the model training scheme is: training the first model respectively by the base station and the UE.

In one embodiment of the disclosure, the second threshold may be preset, and when the base station determines that the model training capability of the UE is greater than or equal to the first threshold and less than the second threshold, it may be considered that the current model training capability of the UE is average, and the UE has the model training ability. At this time, the base station and the UE may train the first model respectively to avoid the situation that "only the base station trains the model or only the UE trains the model", thereby improving the flexibility of the training method.

FIG. 5B is a flowchart illustrating an interaction between the UE and the base station when the base station and the UE train the first model respectively according to an embodiment of the disclosure. As illustrated in FIG. 5B, training the first model respectively by the base station and the UE may include the following.

At block 503A, the first model is pre-trained based on local training data of the base station to obtain a pre-trained model.

At block 503B, the pre-trained model is sent to the UE, such that the UE retrains the pre-trained model.

In one embodiment of the disclosure, after the UE retrains the pre-trained model, the UE may test the trained model to obtain a test result and calculate the precision of the trained model.

At block 503C, the retrained model and model performance information sent by the UE are obtained.

It is noteworthy that, in one embodiment of the disclosure, the model performance information may include a test result obtained testing the trained model via the UE and the precision of the trained model.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

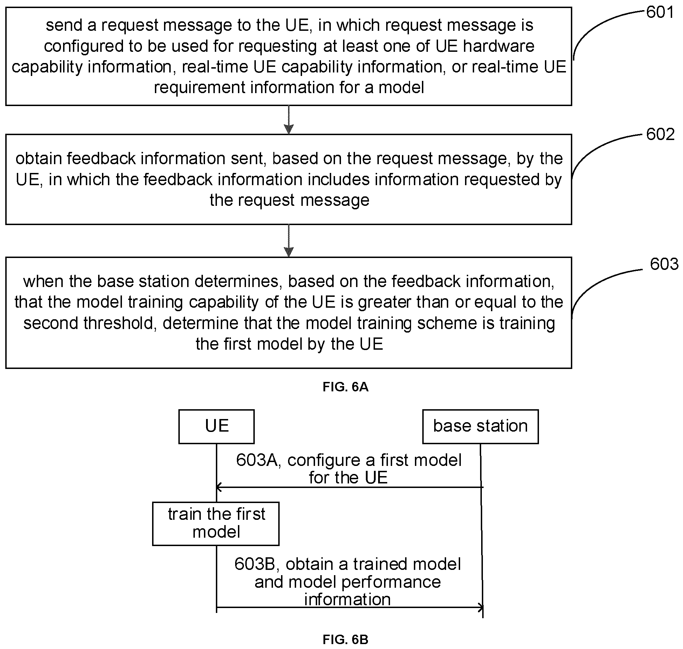

FIG. 6 is a schematic flowchart illustrating a model processing method based on a UE capability according to an embodiment of the disclosure. The method is performed by a base station. As illustrated in FIG. 6, the model processing method based on the UE capability may include the following.

At block 601, a request message is sent to the UE. The request message is configured to be used for requesting at least one of UE hardware capability information, real-time UE capability information, or real-time UE requirement information for a model.

At block 602, feedback information sent, based on the request message, by the UE, is obtained. The feedback information includes information requested by the request message.

Introductions of blocks 601-602 may make reference to the descriptions of foregoing embodiments, which are not repeated in embodiments of the disclosure.

At block 603, when the base station determines, based on the feedback information, that the model training capability of the UE is greater than or equal to the second threshold, it is determined that the model training scheme is training the first model by the UE.

In one embodiment of the disclosure, when the base station determines that the model training capability of the UE is greater than or equal to the second threshold, it considers that the current model training capability of the UE is relatively strong, and at this time, the model training may be completed locally by the UE.

FIG. 6B is a flowchart illustrating an interaction between the UE and the base station when the UE trains the first model according to an embodiment of the disclosure. As illustrated in FIG. 6B, the method for training the first model by the UE may include the following.

At block 603A, the first model is configured for the UE, such that the UE trains the first model.

In one embodiment of the disclosure, the method for configuring the first model by the base station for the UE may include that: the base station may configure the initial model and training parameters for the UE, so that the UE may train the initial model based on the training parameters, to obtain the trained model.

At block 603B, the trained model and model performance information sent by the UE are obtained.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

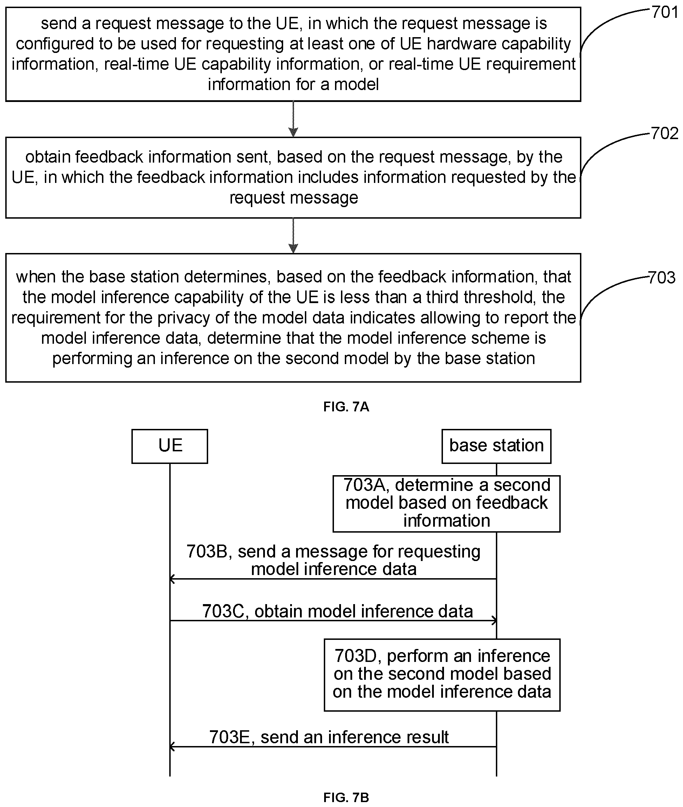

FIG. 7 is a schematic flowchart illustrating model processing method based on a UE capability according to an embodiment of the disclosure. The method is performed by a base station. As illustrated in FIG. 7, the model processing method based on the UE capability may include the following.

At block 701, a request message is sent to the UE. The request message is configured to be used for requesting at least one of UE hardware capability information, real-time UE capability information, or real-time UE requirement information for a model.

At block 702, feedback information sent, based on the request message, by the UE is obtained. The feedback information includes information requested by the request message.

Introductions of blocks 701-702 may make reference to the descriptions of foregoing embodiments, which are not repeated in embodiments of the disclosure.

At block 703, when the base station determines, based on the feedback information, that the model inference capability of the UE is less than a third threshold, the requirement for the privacy of the model data indicates allowing to report the model inference data, and the UE has a low requirement for inference latency, it is determined that the model inference scheme is performing an inference on the second model by the base station.

In one embodiment of the disclosure, the third threshold may be preset. When the base station determines that the model inference capability of the UE is less than the third threshold, it may be considered that the current model inference capability of the UE is too low to complete the model inference. Therefore, in order to ensure that the model inference is performed efficiently, the inference is performed on the second model by the base station.

FIG. 7B is a flowchart illustrating an interaction between the UE and the base station when the base station performs an inference on the second model according to an embodiment of the disclosure. As illustrated in FIG. 7B, the method for performing the inference on the second model by the base station may include the following.

At block 703A, a second model is determined based on the feedback information.

In one embodiment of the disclosure, the base station may determine, based on the feedback information (such as the real-time UE requirement information for the model), the requirement of the UE for the model used for the inference, and further determine an appropriate second model based on the requirement of the UE for the model used for the inference.

It is noteworthy that, in one embodiment of the disclosure, the second model may be a model trained by a model training method (i.e., a model obtained after the training of the above-mentioned first model is completed). In another embodiment of the disclosure, the second model may be different from the model trained by the model training method.

At block 703B, a message for requesting model inference data is sent to the UE.

It is noteworthy that, in one embodiment of the disclosure, a premise for the base station to perform an inference on the second model is: allowing the UE to report the model inference data to the base station, such that the base station may obtain the model inference data of the UE side, to complete subsequent steps of the model inference.

At block 703C, model inference data sent by the UE is obtained.

At block 703D, an inference is performed on the second model based on the model inference data.

At block 703E, an inference result is sent to the UE.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

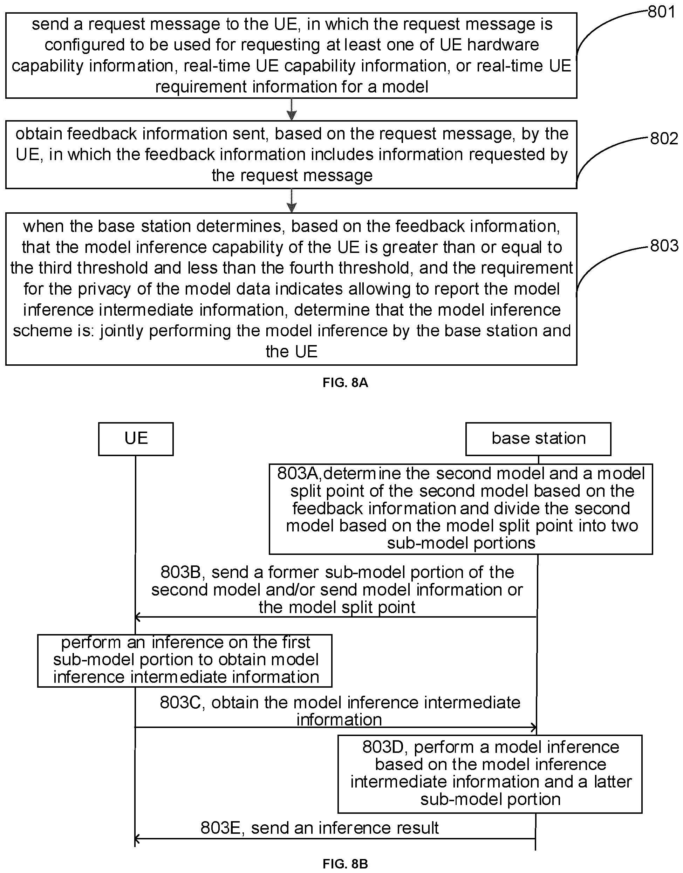

FIG. 8 is a schematic flowchart illustrating a model processing method based on a UE capability according to an embodiment of the disclosure. The method is performed by a base station. As illustrated in FIG. 8, the model processing method based on the UE capability may include the following.

At block 801, a request message is sent to the UE. The request message is configured to be used for requesting at least one of UE hardware capability information, real-time UE capability information, or real-time UE requirement information for a model.

At block 802, feedback information sent, based on the request message, by the UE is obtained. The feedback information includes information requested by the request message.

Introductions of blocks 801-802 may make reference to the descriptions of foregoing embodiments, which are not repeated in embodiments of the disclosure.

At block 803, when the base station determines, based on the feedback information, that the model inference capability of the UE is greater than or equal to the third threshold and less than the fourth threshold, and the requirement for the privacy of the model data indicates allowing to report the model inference intermediate information, it is determined that the model inference scheme is: jointly performing the model inference by the base station and the UE.

In one embodiment of the disclosure, the fourth threshold may be preset, and when the base station determines that the model inference capability of the UE is greater than or equal to the third threshold and less than the fourth threshold, it may be considered that the current model inference capability of the UE is average, and the UE has the model inference ability. At this time, the base station and the UE may jointly train the second model to avoid the situation that "only the base station performs the inference on the model or only the UE performs the inference on the model", thereby improving the flexibility of the inference method, such that the computing power of UE and base station may be flexibly scheduled.

FIG. 8B is a flowchart illustrating an interaction between the UE and the base station when the base station and the UE jointly perform the inference on the second model according to an embodiment of the disclosure. As illustrated in FIG. 8B, the method for jointly performing the model inference by the base station and the UE may include the following.

At block 803A, the second model is determined based on the feedback information, a model split point of the second model is determined, and the second model is divided based on the model split point into two sub-model portions.

In one embodiment of the disclosure, the method for the base station to determine the second model may refer to the descriptions of foregoing embodiments, which are not repeated in embodiments of the disclosure.

It is noteworthy that, in one embodiment of the disclosure, dividing the second model is mainly to send the former portion of the model to the UE side, such that the UE may perform the inference on the former portion of the model. Based on this, in an embodiment of the disclosure, the method for determining the model split point of the second model may be determined based on model inference capability of the UE. Therefore, in an embodiment of the disclosure, the method for the base station to determine the model split point of the second model may be: determining the model split point based on the real-time UE capability information.

In detail, in one embodiment of the disclosure, the second model includes at least one layer of sub-models connected sequentially. When the model split point is closer to the first-layer sub-model of the second model, the less the number of sub-model layers included in the obtained former sub-model portion, the weaker the inference capability required to perform the inference on the former sub-model portion (for example, the smaller the computing power required), the larger the data amount of inference intermediate information, and the greater the overhead required to transmit the inference intermediate information. When the model split point is closer to the last-layer sub-model of the second model, the more the number of sub-model layers included in the obtained former sub-model portion, the stronger the inference capability required to perform the inference on the former sub-model portion (for example, the larger the computing power required), the smaller the data amount of inference intermediate information, and the less the overhead required for transmitting the inference intermediate information.

Therefore, in one embodiment of the disclosure, the base station needs to determine the current model inference capability of the UE based on the real-time UE capability information, and then determine the model split point of the second model based on the current model inference capability of the UE, such that the model inference capability required by the finally obtained former half of the model may match the current model inference capability of the UE, to ensure that the model inference may be successfully performed by the UE subsequently.

At block 803B, the former sub-model portion of the second model is sent to the UE, and/or the model information and model split point of the second model are sent to the UE, such that the UE performs the inference on the first sub-model portion to obtain the model inference intermediate information.

It is noteworthy that, in one embodiment of the disclosure, in the block 803B, only the former sub-model portion of the second model is sent to the UE. In another embodiment of the disclosure, in the block 803B, only the model information and the model split point of the second model are sent to the UE. In yet another embodiment of the disclosure, in the block 803B, the former sub-model portion of the second model, the model information and the model split point of the second model are sent to the UE.

The method for determining when to send only the former sub-model portion of the second model to the UE or when to send only the model information and the model split point of the second model to the UE is mainly based on information on whether the second model is deployed on the UE side.

In detail, some models are generally deployed on the UE side. In one embodiment of the disclosure, when the second model is deployed on the UE side, the base station does not need to send the former sub-model portion to the UE in the block 803B, but only needs to send the model information and the model split point of the second model. After the UE obtains the model information and the model split point of the second model sent by the base station, the UE may determine the second model deployed on the UE side based on the model information of the second model, then divide the second model based on the model split point into two sub-model portions, and perform the inference on the first sub-model portion based on the model inference data to obtain the model inference intermediate information.

In another embodiment of the disclosure, when the second model is not deployed on the UE side, the base station may directly send the first sub-model portion in the block 803A to the UE, such that the UE performs the inference on the first sub-model portion based on model inference data to obtain the model inference intermediate information.

At block 803C, the model reasoning intermediate information sent by the UE is obtained.

At block 803D, the model inference is performed based on the model inference intermediate information and the latter sub-model portion of the second model.

In one embodiment of the disclosure, the method of performing the model inference based on the model inference intermediate information and the latter sub-model portion of the second model may mainly be: using the model inference intermediate information as the input information of the latter sub-model portion to perform the model inference on the latter sub-model portion.

At block 803E, an inference result is sent to the UE.

In addition, it is noteworthy that the above blocks 803A-803E are only introduced for an example in which the UE performs the inference on the first sub-model portion and the base station performs the inference on the latter sub-model portion. In another embodiment of the disclosure, when the base station and the UE jointly perform the model inference, it is also possible that the base station perform the inference on the former sub-model portion and the UE performs the inference on the latter sub-model portion. The execution method of the case that the base station performs the inference on the former sub-model portion and the UE performs the inference on the latter sub-model portion is similar to the above blocks 803A-803E, which is not described in embodiments of the disclosure.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

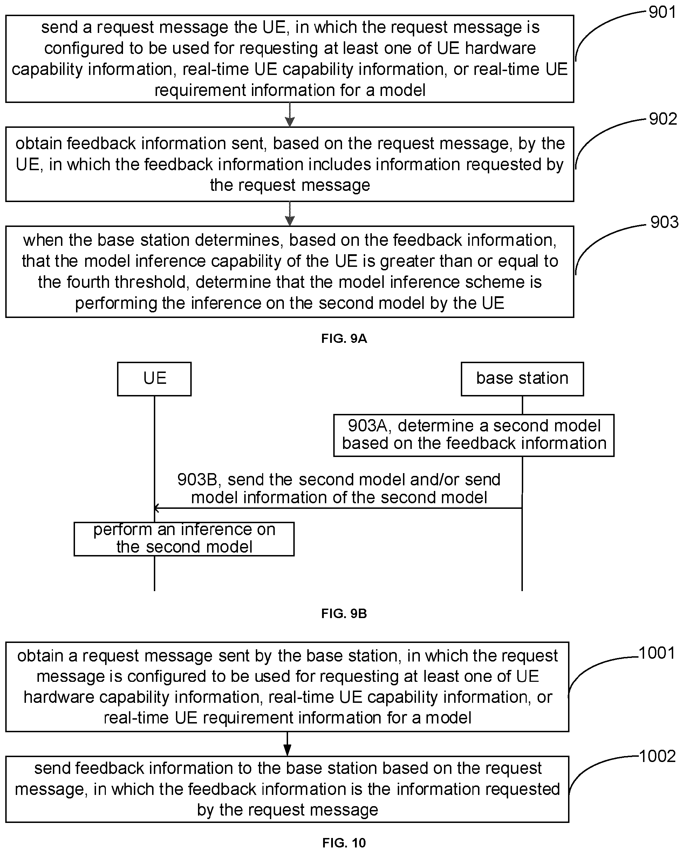

FIG. 9 is a schematic flowchart illustrating a model processing method based on a UE capability according to an embodiment of the disclosure. The method is performed by a base station. As illustrated in FIG. 9, the model processing method based on the UE capability may include the following.

At block 901, a request message is sent to the UE. The request message is configured to be used for requesting at least one of UE hardware capability information, real-time UE capability information, or real-time UE requirement information for a model.

At block 902, feedback information sent, based on the request message, by the UE is obtained. The feedback information includes information requested by the request message.

Introductions of blocks 901-902may make reference to the descriptions of foregoing embodiments, which are not repeated in embodiments of the disclosure.

At block 903, when the base station determines, based on the feedback information, that the model inference capability of the UE is greater than or equal to the fourth threshold, it is determined that the model inference scheme is performing the inference on the second model by the UE.

In one embodiment of the disclosure, when the base station determines that the model inference capability of the UE is greater than or equal to the fourth threshold, it considers that the current model inference capability of the UE is strong, and at this time, the model inference may be completed locally by the UE.

FIG. 9B is a flowchart illustrating an interaction between the UE and the base station when the UE performs the inference on the second model according to an embodiment of the disclosure. As illustrated in FIG. 9B, the method for performing the inference on the second model by the UE may include the following.

At block 903A, a second model is determined based on the feedback information.

At block 903B, the second model is sent to the UE and/or the model information of the second model is sent to the UE, such that the UE performs the inference on the second model.

In one embodiment of the disclosure, in the block 903B, only the second model is sent to the UE. In another embodiment of the disclosure, in the block 903B, only send the model information of the second model is sent to the UE. In yet another embodiment of the disclosure, in the block 903B, both the second model and the model information of the second model are sent to the UE.

The method for determining when only the second model is sent to the UE or when only the model information of the second model is sent to the UE is mainly determined based on information on whether the second model is deployed on the UE side.

In detail, some models may be deployed on the UE side. In one embodiment of the disclosure, when the second model is deployed on the UE side, the base station does not need to send the second model to the UE in the block 903B, but only needs to send the model information of the second model to the UE. After the UE obtains the model information of the second model sent by the base station, the second model deployed on the UE side may be determined based on the model information of the second model, so as to perform the inference on the second model based on the model inference data of the UE side.

In another embodiment of the disclosure, when the second model is not deployed on the UE side, the base station may directly send the second model in the block 903A to the UE, such that the UE performs the inference on the second model based on model inference data.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

In addition, it is noteworthy that, in one embodiment of the disclosure, when the base station determines, based on the feedback information, that the current model training capability of the UE is insufficient to support the model training and/or determines that the current model inference capability of the UE is insufficient to support the model inference, traditional solutions may be used for subsequent processing.

Further, it is noteworthy that, in one embodiment of the disclosure, the UE may also assess the UE capability based on at least one of the UE hardware capability information, the real-time UE capability information or the real-time UE requirement information for the model to determine the current model training capability and/or the model inference capability of the UE, determine the model training scheme and/or the model inference scheme currently supported by the UE, and send the model training scheme and/or the model inference scheme currently supported by the UE to the base station, such that the base station may perform, based on the assessment result from the UE, the related configuration for the model training and/or the model inference.

FIG. 10 is a schematic flowchart illustrating a model processing method based on a UE capability according to an embodiment of the disclosure. The method is performed by the UE. As illustrated in FIG. 10, the model processing method based on the UE capability may include the following.

At block 1001, a request message sent by the base station is obtained. The request message is configured to be used for requesting at least one of UE hardware capability information, real-time UE capability information, or real-time UE requirement information for a model.

In one embodiment of the disclosure, the UE hardware capability information includes at least one of:
a number of CPUs of the UE;
a number of GPUs of the UE;
a clock rate of the CPU of UE;
a clock rate of the GPU of the UE;
a cache capacity of the CPU of the UE;
a video memory capacity of the GPU of the UE;
a TOPS of the UE; or
a FLOPS of UE.

In one embodiment of the disclosure, the real-time UE capability information includes at least one of:
real-time computing power information of the UE; in which the real-time UE computing power information includes at least one of a real-time memory occupancy rate of the UE, a real-time CPU occupancy rate of the UE, a real-time GPU occupancy rate of the UE, or a real-time computing speed of the UE; or
real-time energy consumption information of the UE; in which the real-time energy consumption information of the UE includes at least one of a remaining quantity of electricity of the UE or an activation status of a power saving mode of the UE.

In one embodiment of the disclosure, the real-time UE requirement information for the model includes at least one of:
a requirement for a precision of a model;
a requirement for a model inference latency; or
a requirement for a privacy of model data; in which the requirement for the privacy of the model data includes: information on whether the UE is allowed to report the model data of the UE side, and the model data includes at least one of model training data, model inference data, or model inference intermediate information.

At block 1002, feedback information is sent to the base station based on the request message, in which the feedback information is the information requested by the request message.

Details about the UE hardware capability information, the real-time UE capability information, the real-time UE requirement information for the model, and the feedback information, may make reference to descriptions of subsequent embodiments, which are not repeated in embodiments of the disclosure.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

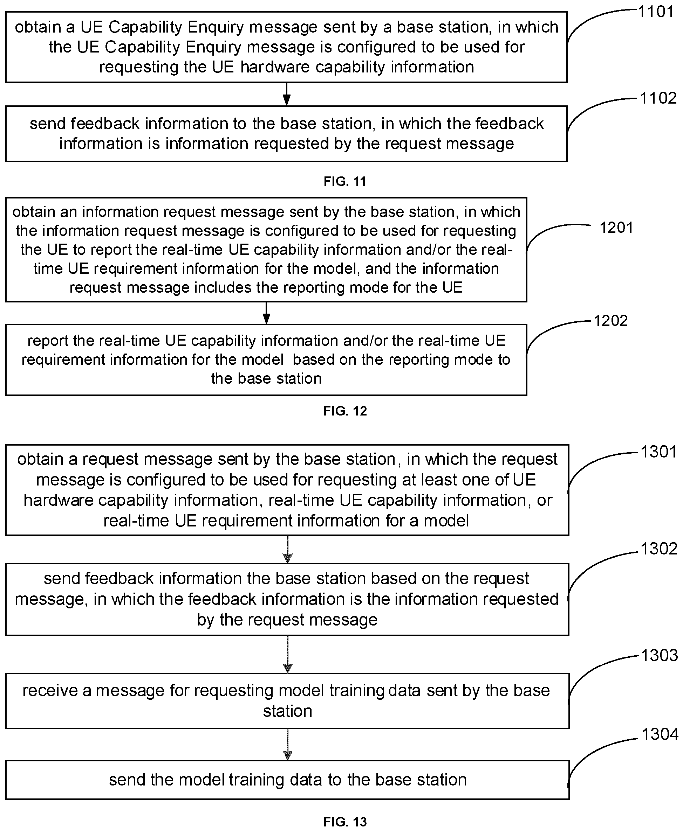

FIG. 11 is a schematic flowchart illustrating a model processing method based on a UE capability according to an embodiment of the disclosure. The method is performed by the UE. As illustrated in FIG. 11, the model processing method based on the UE capability may include the following.

At block 1101, a UE Capability Enquiry message sent by a base station is obtained, in which the UE Capability Enquiry message is configured to be used for requesting the UE hardware capability information.

At block 1102, UE Capability Information is sent to the base station, in which the UE Capability Information includes the UE hardware capability information.

The detailed introductions of blocks 1101-1102may make reference to the descriptions of foregoing embodiments, which are not repeated in embodiments of the disclosure.

In conclusion, with the model processing method based on the UE capability according to the disclosure, the base station may send the request message to the UE to request at least one of the UE hardware capability information, the real-time UE capability information or the real-time UE requirement information for the model, the base station may obtain the feedback information sent by the UE, in which the feedback information includes the information requested by the request message, and the base station may determine the model training scheme and/or model inference scheme based on the feedback information, to train the model based on the model training scheme and/or perform the inference on the model based on the model inference scheme. It may be seen that, in embodiments of the disclosure, in determining the model training scheme and/or model inference scheme, the base station may comprehensively determine the current model training capability and the current model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference. Therefore, the efficiency of model training and/or model inference is ensured without affecting the normal operation of other services of the UE.

FIG. 12 is a schematic flowchart illustrating a model processing method based on a UE capability according to an embodiment of the disclosure. The method is performed by the UE. As illustrated in FIG. 12, the model processing method based on the UE capability may include the following.

At block 1201, an information request message sent by the base station is obtained. The information request message is configured to be used for requesting the UE to report the real-time UE capability information and/or the real-time UE requirement information for the model, and the information request message includes the reporting mode for the UE.

At block 1202, the real-time UE capability information and/or the real-time UE requirement information for the model are reported based on the reporting mode to the base station.

In one embodiment of the disclosure, the reporting mode includes at least one of:
periodic reporting;
semi-persistent reporting; or
trigger-based reporting.

In one embodiment of the disclosure, in reporting the real-time UE capability information and/or the real-time UE requirement information for the model, the UE may report the real-time UE capability information and/or the real-time UE requirement information for the model based on the reporting mode in an incremental reporting manner.

Further, in one embodiment of the disclosure, different information included in the UE hardware capability information corresponds to different privacy levels, and/or different information included in the real-time UE capability information corresponds to different privacy levels, and/or different information included in the real-time UE requirement information for the model corresponds to different privacy levels. In one embodiment of the disclosure, the method for the base station to obtain the real-time UE capability information and/or the real-time UE requirement information for the model reported, based on the reporting mode, by the UE may include: obtaining information whose privacy level is equal to or less than a predetermined privacy level among the real-time UE capability information reported, based on the reporting mode, by the UE, and/or obtaining information whose privacy level is equal to or lower than the predetermined privacy level among the real-time UE requirement information for the model reported, based on the reporting mode, by the UE.

In one embodiment of the disclosure, the predetermined privacy level may be determined by the UE. In another embodiment of the disclosure, the predetermined privacy level may be set by a user in the UE.

In one embodiment of the disclosure, the method of reporting the real-time UE capability information and/or the real-time UE requirement information for the model to the base station based on the reporting mode includes at least one of:
reporting the real-time UE capability information and/or the real-time UE requirement information for the model to the base station through RRC signaling;
reporting the real-time UE capability information and/or the real-time UE requirement information for the model to the base station through MAC CE signaling; or
reporting the real-time UE capability information and/or the real-time UE requirement information for the model to the base station through a PUCCH.

In one embodiment of the disclosure, reporting the real-time UE capability information and/or the real-time UE requirement information for the model to the base station through the PUCCH includes the following.

At block 1, a report information list is sent to the base station. The report information list is configured to indicate: all information that the UE can report to the base station among the real-time UE capability information and/or the real-time UE requirement information for the model requested by the base station.

At block 2, the PUCCH configured by the base station is obtained.

At block 3, the real-time UE capability information and/or the real-time UE requirement information for the model are sent to the base station through the configured PUCCH.

In one embodiment of the disclosure, the method for obtaining the PUCCH configured by the base station in the block 2 includes at least one of:
obtaining the PUCCH configured by the base station in a semi-static resource allocation manner; or
obtaining the PUCCH configured by the base station in a dynamic resource allocation manner.

Detailed introductions of the periodic reporting, the semi-persistent reporting, the trigger-based reporting, the incremental reporting, the privacy level, the semi-static resource allocation for configuring the PUCCH, and the dynamic resource allocation for configuring the PUCCH may make reference to the description of foregoing embodiments, which are not repeated in embodiments of the disclosure.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

FIG. 13 is a schematic flowchart illustrating a model processing method based on a UE capability according to an embodiment of the disclosure. The method is performed by the UE. As illustrated in FIG. 13, the model processing method based on the UE capability may include the following.

At block 1301, a request message sent by the base station is obtained. The request message is configured to be used for requesting at least one of UE hardware capability information, real-time UE capability information, or real-time UE requirement information for a model.

At block 1302, feedback information is sent to the base station based on the request message. The feedback information is the information requested by the request message.

At block 1303, a message for requesting model training data sent by the base station is received.

At block 1304, the model training data is sent to the base station.

Embodiments of FIG. 13 relate to a scheme in which only the base station trains the first model, and detailed introductions about the blocks 1301-1304 may make reference to the descriptions of foregoing embodiments, which are not repeated in embodiments of the disclosure.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

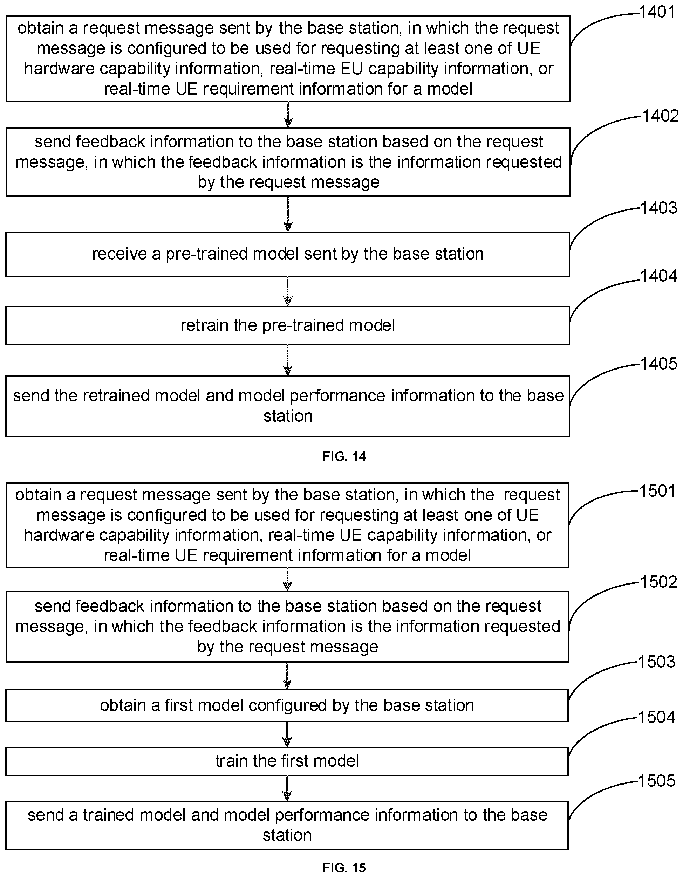

FIG. 14 is a schematic flowchart illustrating a model processing method based on a UE capability according to an embodiment of the disclosure. The method is performed by the UE. As illustrated in FIG. 14, the model processing method based on the UE capability may include the following.

At block 1401, a request message sent by the base station is obtained. The request message is configured to be used for requesting at least one of UE hardware capability information, real-time EU capability information, or real-time UE requirement information for a model.

At block 1402, feedback information is sent to the base station based on the request message. The feedback information is the information requested by the request message.

At block 1403, a pre-trained model sent by the base station is received.

At block 1404, the pre-trained model is retrained.

In one embodiment of the disclosure, after the UE retrains the pre-trained model, the UE may test the trained model to obtain a test result and calculate the precision of the trained model.

At block 1405, the retrained model and model performance information are sent to the base station.

It is noteworthy that, in an embodiment of the disclosure, the model performance information may include: a test result obtained by testing the trained model via the UE and the precision of the trained model.

Embodiments of FIG. 14 relate to a scheme in which the base station and the UE train the first model respectively, and the detailed introductions of the blocks 1401-1405 may make reference to the descriptions of foregoing embodiments, which are not repeated in embodiments of the disclosure.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

FIG. 15 is a schematic flowchart illustrating a model processing method based on a UE capability according to an embodiment of the disclosure. The method is performed by the UE. As illustrated in FIG. 15, the model processing method based on the UE capability may include the following.

At block 1501, a request message sent by the base station is obtained. The request message is configured to be used for requesting at least one of UE hardware capability information, real-time UE capability information, or real-time UE requirement information for a model.

At block 1502, feedback information is sent to the base station based on the request message. The feedback information is the information requested by the request message.

At block 1503, a first model configured by the base station is obtained.

At block 1504, the first model is trained.

At block 1505, a trained model and model performance information are sent to the base station.

Embodiments of FIG. 15 relate to a solution in which only the UE trains the first model, and detailed introductions of the blocks 1501-1505 may make reference to the descriptions of foregoing embodiments, which are not repeated in embodiments of the disclosure.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

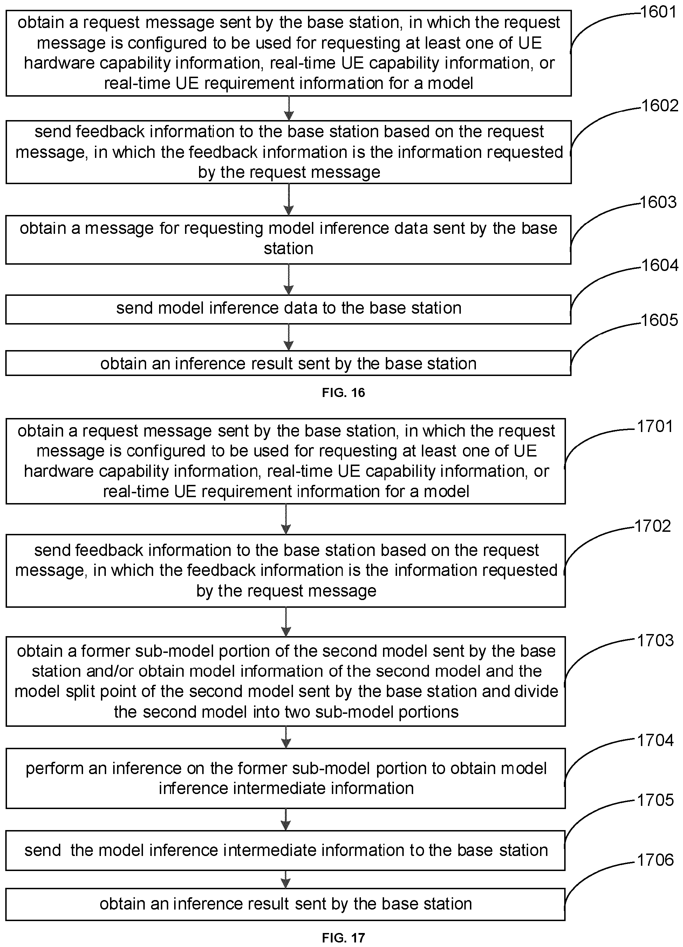

FIG. 16 is a schematic flowchart illustrating a model processing method based on a UE capability according to an embodiment of the disclosure. The method is performed by the UE. As illustrated in FIG. 16, the model processing method based on the UE capability may include the following.

At block 1601, a request message sent by the base station is obtained. The request message is configured to be used for requesting at least one of UE hardware capability information, real-time UE capability information, or real-time UE requirement information for a model.

At block 1602, feedback information is sent to the base station based on the request message. The feedback information is the information requested by the request message.

At block 1603, a message for requesting model inference data sent by the base station is obtained.

At block 1604, model inference data is sent to the base station;
At block 1605, an inference result sent by the base station is obtained.

Embodiments of FIG. 16 relate to a solution in which only the base station performs inference on the second model, and detailed introductions of the blocks 1601-1605 may make reference to descriptions of foregoing embodiments, which are not repeated in embodiments of the disclosure.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

FIG. 17 is a schematic flowchart illustrating a model processing method based on a UE capability according to an embodiment of the disclosure. The method is performed by the UE. As illustrated in FIG. 17, the model processing method based on the UE capability may include the following.

At block 1701, a request message sent by the base station is obtained. The request message is configured to be used for requesting at least one of UE hardware capability information, real-time UE capability information, or real-time UE requirement information for a model.

At block 1702, feedback information is sent to the base station based on the request message. The feedback information is the information requested by the request message.

At block 1703, a former sub-model portion of the second model sent by the base station is obtained and/or model information of the second model and the model split point of the second model sent by the base station are obtained and the second model is divided into two sub-model portions.

At block 1704, an inference is performed on the former sub-model portion to obtain model inference intermediate information.

In one embodiment of the disclosure, the method for the UE to perform the inference on the former sub-model portion may be: using the model inference data as input information of the former sub-model portion of the second model to perform the inference on the former sub-model portion.

At block 1705, the model inference intermediate information is sent to the base station.

At block 1706, an inference result sent by the base station is obtained.

Embodiments of FIG. 17 relate to a scheme in which the base station and the UE jointly perform the model inference, and the detailed introductions of the blocks 1701-1706 may make reference to the descriptions of foregoing embodiments, which are not repeated in embodiments of the disclosure.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

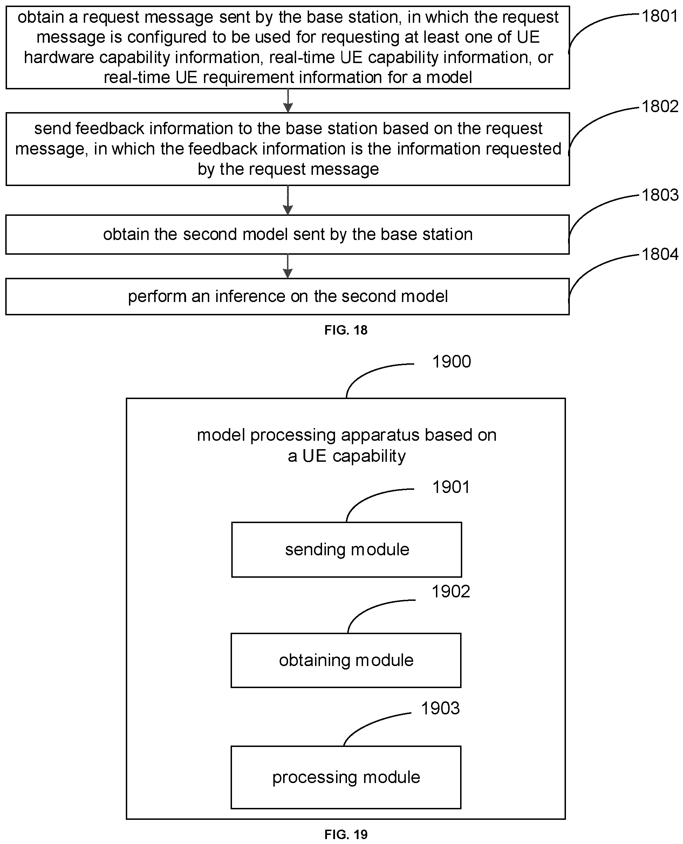

FIG. 18 is a schematic flowchart illustrating a model processing method based on a UE capability according to an embodiment of the disclosure. The method is performed by the UE. As illustrated in FIG. 18, the model processing method based on the UE capability may include the following.

At block 1801, a request message sent by the base station is obtained. The request message is configured to be used for requesting at least one of UE hardware capability information, real-time UE capability information, or real-time UE requirement information for a model.

At block 1802, feedback information is sent to the base station based on the request message. The feedback information is the information requested by the request message.

At block 1803, the second model sent by the base station is obtained.

At block 1804, an inference is performed on the second model.

Embodiments of FIG. 18 relate to a solution in which the UE performs the inference on the second model, and detailed introductions of the blocks 1801-1804 may make reference to descriptions of foregoing embodiments, which are not repeated in embodiments of the disclosure.

In conclusion, in the model processing method based on the UE capability according to the disclosure, the base station may send the request message to the UE to request at least one of the UE hardware capability information, the real-time UE capability information, or the real-time UE requirement information for the model. The base station may obtain the feedback information sent by the UE, the feedback information includes the information requested by the request message. The base station may determine the model training scheme and/or model inference scheme based on the feedback information, to train the model based on the model training scheme and/or perform the inference on the model based on the model inference scheme. It can be seen that, in embodiments of the disclosure, in determining the model training scheme and/or model inference scheme, the base station may comprehensively determine the current model training capability and model inference capability of the UE based on the UE hardware capability information, the real-time UE capability information and the real-time UE requirement information for the model, such that the finally determined model training scheme match the model training capability of the UE and the finally determined model inference scheme match the model inference capability of the UE, thereby avoiding the occurrence of the situation that "the configuration of model training/model inference does not match the UE capability or the requirement of the UE for model training/model inference". Therefore, the efficiency of model training and/or model inference may be ensured without affecting the normal operation of other services of the UE.

FIG. 19 is a schematic diagram illustrating a model processing apparatus based on a UE capability according to an embodiment of the disclosure. As illustrated in FIG. 19, the apparatus 1900 may include a sending module, an obtaining module and a processing module.

The sending module is configured to send a request message to the UE. The request message is configured to be used for requesting at least one of UE hardware capability information, real-time UE capability information, or real-time UE requirement information for a model.

The obtaining module is configured to obtain feedback information sent, based on the request message, by the UE. The feedback information includes information requested by the request message.

The processing module is configured to determine a model training scheme and/or a model inference scheme based on the feedback information, to train the model based on the model training scheme and/or to perform an inference on the model based on the model inference scheme.

In conclusion, in the model processing apparatus based on the UE capability according to the disclosure, the base station may send the request message to the UE to request at least one of the UE hardware capability information, the real-time UE capability information, or the real-time UE requirement information for the model. Then, the base station may obtain the feedback information sent by the UE. The feedback information includes the information requested by the request message. The base station may determine the model training scheme and/or model inference scheme based on the feedback information, to train the model based on the model training scheme and/or perform the inference on the model based on the model inference scheme. It may be seen that, in embodiments of the present disclosure, in determining the model training scheme and/or the model inference scheme, the base station may comprehensively determine the current model training capability and model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference". Therefore, the efficiency of model training and/or model inference is ensured without affecting the normal operation of other services of the UE.

In one embodiment of the disclosure, the UE hardware capability information includes at least one of:
a number of CPUs of the UE;
a number of GPUs of the UE;
a clock rate of a CPU of the UE;
a clock rate of a GPU of the UE;
a cache capacity of the CPU of the UE;
a video memory capacity of the GPU of the UE;
a TOPS of the UE; or
a FLOPS of the UE.

In one embodiment of the disclosure, the real-time UE capability information includes at least one of:
real-time computing power information of the UE; in which the real-time computing power information of the UE includes at least one of a real-time memory occupancy rate of the UE, a real-time CPU occupancy rate of the UE, a real-time GPU occupancy rate of the UE, or a real-time computing speed of the UE; or
real-time energy consumption information of the UE; in which the real-time energy consumption information of the UE includes at least one of a remaining quantity of electricity of the UE or an activation status of a power saving mode of the UE.

In one embodiment of the disclosure, the real-time UE requirement information for the model includes at least one of:
a requirement for a precision of the model;
a requirement for a model inference latency; or
a requirement for a privacy of model data; in which the requirement for the privacy of the model data includes: information on whether the UE is allowed to report the model data of the UE side, and the model data includes at least one of model training data, model inference data, or model inference intermediate information.

In one embodiment of the disclosure, the request message is configured to be used for requesting UE hardware capability information.

The sending module is also configured to:
send a UE Capability Enquiry message to the UE.

In one embodiment of the disclosure, the obtaining module is also configured to:
obtain UE Capability Information sent, based on the UE Capability Enquiry message, by the UE, in which the UE Capability Information includes the UE hardware capability information.

In one embodiment of the disclosure, the sending module is also configured to:
send an information request message to the UE, in which the information request message is configured to be used for requesting the UE to report real-time UE capability information and/or real-time UE requirement information for the model, and the information request message includes a reporting mode for the UE.

In one embodiment of the disclosure, the obtaining module is further configured to:
obtain the real-time UE capability information and/or the real-time UE requirement information for the model reported, based on the reporting mode, by the UE.

In one embodiment of the disclosure, the reporting mode includes at least one of:
periodic reporting;
semi-persistent reporting; or
trigger-based reporting.

In one embodiment of the disclosure, the device is further configured to:
send a reporting period corresponding to the periodic report to the UE; and/or
send a reporting condition corresponding to the semi-persistent reporting to the UE; and/or
send a trigger condition corresponding to the trigger-based reporting to the UE.

In one embodiment of the disclosure, the obtaining module is further configured to:
obtain the real-time UE capability information and/or the real-time UE requirement information for the model incrementally reported, based on the reporting mode, by the UE.

In one embodiment of the disclosure, different information included in the UE hardware capability information corresponds to different privacy levels, and/or different information included in the real-time UE capability information corresponds to different privacy levels, and/or different information included in the real-time UE requirement information for the model corresponds to different privacy levels;
the obtaining module is further configured to:
obtain information whose privacy level is equal to or lower than a predetermined privacy level among the real-time UE capability information reported, based on the reporting mode, by the UE, and/or information whose privacy level is equal to or lower than the predetermined privacy level among the real-time UE requirement information for the model reported, based on the reporting mode, by the UE; in which the predetermined privacy level is determined by the UE.

In one embodiment of the disclosure, the obtaining module is further configured to:
obtain the real-time UE capability information and/or the real-time UE requirement information for the model reported, through RRC signaling, by the UE;
obtain the real-time UE capability information and/or the real-time UE requirement information for the model reported, through MAC CE signaling, by the UE; or
obtain the real-time UE capability information and/or the real-time UE requirement information for the model reported, through a PUCCH, by the UE;

In one embodiment of the disclosure, the obtaining module is further configured to:
obtain a report information list sent by the UE, in which the report information list is configured to indicate: all information that the UE can report to the base station among the real-time UE capability information and/or the real-time UE requirement information for the model requested by the base station;
configure a PUCCH for the UE; and
obtain, through the PUCCH, the real-time UE capability information and/or the real-time UE requirement information for the model sent by the UE.

In one embodiment of the disclosure, the obtaining module is further configured to:
configure the PUCCH for the UE in a semi-static resource allocation manner; or
configure the PUCCH for the UE in a dynamic resource allocation manner.

In one embodiment of the disclosure, the processing module is further configured to;
when the base station determines, based on the feedback information, that the model training capability of the UE is less than a first threshold, and the requirement for the privacy of the model data indicates allowing to report the model training data, determine that the model training scheme is training a first model by the base station.

Training the first model by the base station includes:
sending a message for requesting model training data to the UE;
obtaining the model training data sent by the UE; and
training the first model based on the model training data.

In one embodiment of the disclosure, the processing module is further configured to:
when the base station determines, based on the feedback information, that the model training capability of the UE is greater than or equal to a first threshold and less than a second threshold, determine that the model training scheme is: training the first model by the base station and the UE respectively.

Training the first model by the base station and the UE respectively includes:
pre-training the first model based on local training data of the base station to obtain a pre-trained model;
sending the pre-trained model to the UE, such that the UE retrains the pre-trained model; and
obtaining a trained model and model performance information sent by the UE.

In one embodiment of the disclosure, the processing module is further configured to:
when the base station determines, based on the feedback information, that the model training capability of the UE is greater than or equal to the second threshold, determine that the model training scheme is training the first model by the UE.

Training the first model by the UE includes:
configuring the first model for the UE, so that the UE trains the first model; and
obtaining the trained model and model performance information sent by the UE.

In one embodiment of the disclosure, the processing module is further configured to:
when the base station determines, based on the feedback information, that the model inference capability of the UE is less than a third threshold, and the requirement for the privacy of the model data indicates allowing to report the model inference data, determine that the model inference solution is performing an inference on a second model by the base station .

Performing the inference on the second model by the base station includes:
determining a second model based on the feedback information;
sending a message for requesting model inference data to the UE;
obtaining the model inference data sent by the UE;
performing the inference on the second model based on the model inference data; and
sending an inference result to the UE.

In one embodiment of the disclosure, the processing module is further configured to:
when the base station determines, based on the feedback information, that the model inference capability of the UE is greater than or equal to a third threshold and less than a fourth threshold, and the requirement for the privacy of the model data indicates allowing to report the model inference intermediate information, determine that the model inference scheme is jointly performing a model inference by the base station and the UE.

Jointly performing the model inference by the base station and the UE includes:
determining a second model based on the feedback information, determining a model split point of the second model, and splitting the second model based on the model split point into two sub-model portions;
sending a former sub-model portion of the second model to the UE, and/or sending the model information and the model split point of the second model to the UE, to allow the UE to perform the inference on the former sub-model portion to obtain the model inference intermediate information.
obtaining the model inference intermediate information sent by the UE;
performing model inference based on the model inference intermediate information and a latter sub-model portion of the second model; and
sending an inference result to the UE.

In one embodiment of the disclosure, the processing module is further configured to:
when the base station determines, based on the feedback information, that the model inference capability of the UE is greater than or equal to a fourth threshold, determine that the model inference scheme is performing the inference on the second model by the UE.

Performing the inference on the second model by the UE includes:
determining a second model based on the feedback information; and
sending the second model to the UE to allow the UE to perform the inference on the second model.

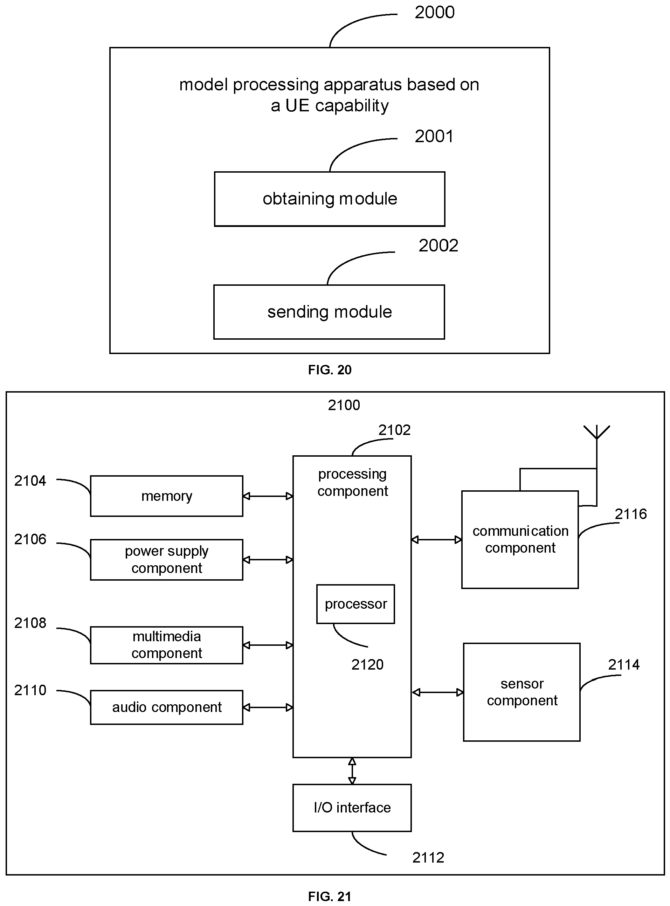

FIG. 20 is a schematic diagram illustrating a model processing apparatus based on a UE capability according to an embodiment of the disclosure. As illustrated in FIG. 20, the apparatus 2000 may include:
an obtaining module, configured to obtain a request message sent by the base station, in which the request message is configured to be used for requesting at least one of UE hardware capability information, real-time UE capability information, or real-time UE requirement information for a model;
a sending module, configured to send feedback information to the base station based on the request message, in which the feedback information is information requested by the request message.

In conclusion, in the model processing apparatus based on the UE capability according to the disclosure, the base station may send the request message to the UE to request at least one of the UE hardware capability information, the real-time UE capability information, or the real-time UE requirement information for the model. Then, the base station may obtain the feedback information sent by the UE. The feedback information includes the information requested by the request message. The base station may determine the model training scheme and/or model inference scheme based on the feedback information, to train the model based on the model training scheme and/or perform the inference on the model based on the model inference scheme. It may be seen that, in embodiments of the present disclosure, in determining the model training scheme and/or the model inference scheme, the base station may comprehensively determine the current model training capability and model inference capability of the UE based on the UE hardware capability information, the real-time UE capability information and the real-time UE requirement information for the model, such that the finally determined model training scheme may match the model training capability of the UE and the finally determined model inference scheme may match the model inference capability of the UE, thereby avoiding the occurrence of the situation that "the configuration of model training/model inference does not match the UE capability or the requirement of the UE for model training/model inference". Therefore, the efficiency of model training and/or model inference is ensured without affecting the normal operation of other services of the UE.

In one embodiment of the disclosure, the UE hardware capability information includes at least one of:
a number of CPUs of the UE;
a number of GPUs of the UE;
a clock rate of a CPU of the UE;
a clock rate of a GPU of the UE;
a cache capacity of the CPU of the UE;
a video memory capacity of the GPU of the UE;
a TOPS of the UE; or
a FLOPS of the UE.

In one embodiment of the disclosure, the real-time UE capability information includes at least one of:
real-time computing power information of the UE; in which the real-time computing power information of the UE includes at least one of a real-time memory occupancy rate of the UE, a real-time CPU occupancy rate of the UE, a real-time GPU occupancy rate of the UE, or a real-time computing speed of the UE; or
real-time energy consumption information of the UE; in which the real-time energy consumption information of the UE includes at least one of a remaining quantity of electricity of the UE or an activation status of a power saving mode of the UE.

In one embodiment of the disclosure, the real-time UE requirement information for the model includes at least one of:
a requirement for a precision of the model;
a requirement for a model inference latency;
a requirement for a privacy of model data; in which the requirement for the privacy of the model data include: information on whether the UE is allowed to report the model data of the UE side, and the model data includes at least one of model training data, model inference data, and model inference intermediate information.

In one embodiment of the disclosure, the request message is configured to be used for requesting UE hardware capability information.

The obtaining module is further configured to:
obtain a UE Capability Enquiry message sent by the base station.

In one embodiment of the disclosure, the sending module is further configured to:
send UE Capability Information to the base station, in which the UE Capability Information includes the UE hardware capability information.

In one embodiment of the disclosure, the obtaining module is configured to:
obtaining the request message sent by the base station includes:
obtaining an information request message sent by the base station, in which the information request message is configured to be used for requesting the UE to report the real-time UE capability information and/or the real-time UE requirement information for the model, and the information request message includes the reporting mode for the UE.

In one embodiment of the disclosure, the sending module is further configured to:
report the real-time UE capability information and/or the real-time UE requirement information for the model to the base station based on the reporting mode.

In one embodiment of the disclosure, the reporting mode includes at least one of:
periodic reporting;
semi-persistent reporting; or
trigger-based reporting.

In one embodiment of the disclosure, the device is further configured to:
send a reporting period corresponding to the periodic reporting to the UE; and/or
send a reporting condition corresponding to the semi-persistent reporting to the UE; and/or
send a trigger condition corresponding to the trigger-based reporting to the UE.

In one embodiment of the disclosure, the sending module is further configured to:
incrementally report the real-time UE capability information and/or the real-time UE requirement information for the model to the base station based on the reporting mode.

In one embodiment of the disclosure, different information included in the UE hardware capability information corresponds to different privacy levels, and/or different information included in the real-time UE capability information corresponds to different privacy levels, and/or different information included in the real-time UE requirement information for the model corresponds to different privacy levels.

The sending module is further configured to:
determine a predetermined privacy level;
report information whose privacy level is equal to or lower than the predetermined privacy level among the real-time UE capability information to the base station based on the reporting mode, and/or report information whose privacy level is equal to or lower than the predetermined privacy level among the real-time UE requirement information for the model to the base station based on the reporting mode.

In one embodiment of the disclosure, the sending module is further configured to:
report the real-time UE capability information and/or the real-time UE requirement information for the model to the base station through RRC signaling;
report the real-time UE capability information and/or the real-time UE requirement information for the model to the base station through MAC CE signaling; or
report the real-time UE capability information and/or the real-time UE requirement information for the model to the base station through the PUCCH.

In one embodiment of the disclosure, the sending module is further configured to:
send a report information list to the base station, in which the report information list is configured to indicate all information that the UE can report to the base station among the real-time UE capability information and/or the real-time UE requirement information for the model requested by the base station;
obtain the PUCCH configured by the base station;
send the real-time UE capability information and/or the real-time UE requirement information for the model to the base station through the PUCCH.

In one embodiment of the disclosure, the sending module is further configured to:
obtain the PUCCH configured by the base station in a semi-static resource allocation manner; or
obtain the PUCCH configured by the base station in a dynamic resource allocation manner.

In one embodiment of the disclosure, the device is further configured to:
receive a message for requesting model training data sent by the base station; and
send the model training data to the base station.

In one embodiment of the disclosure, the device is further configured to:
receive a pre-trained model sent by the base station;
retrain the pre-trained model; and
send a retrained model and model performance information to the base station.

In one embodiment of the disclosure, the device is further configured to:
obtain a first model configured by the base station;
train the first model; and
send a trained model and model performance information to the base station.

In one embodiment of the disclosure, the device is further configured to:
obtain a message for requesting model inference data sent by the base station;
send the model inference data to the base station; and
obtain an inference result sent by the base station.

In one embodiment of the disclosure, the device is further configured to:
obtain a former sub-model portion of the second model sent by the base station, and/or obtain model information of the second model and a model split point of the second model sent by the base station, and divide the second model based on the model split point into two sub-model portions;
perform an inference on the former sub-model portion to obtain model inference intermediate information;
send the model inference intermediate information to the base station; and
obtain an inference result sent by the base station.

In one embodiment of the disclosure, the device is further configured to:
obtain the second model sent by the base station; and
perform an inference on the second model.

FIG. 21 is a block diagram illustrating a UE 2100 according to an embodiment of the disclosure. For example, the UE 2100 may be a mobile phone, a computer, a digital broadcasting terminal device, a messaging device, a game console, a tablet device, a medical device, a fitness device, a personal digital assistant, and the like.

As illustrated in FIG. 21, the UE 2100 may include at least one of: a processing component 2102, a memory 2104, a power supply component 2106, a multimedia component 2108, an audio component 2110, an input/output (I/O) interface 2112, a sensor component 2114, and a communication component 2116.

The processing component 2102 generally controls the overall operations of the UE 2100, such as those associated with display, phone calls, data communications, camera operations, and recording operations. The processing component 2102 may include at least one processor 2120 to execute instructions to complete all or part of the steps of the above-mentioned method. In some examples, the processing component 2102 may include at least one module to facilitate interaction between the processing component 2102 and other components. For example, the processing component 2102 may include a multimedia module to facilitate interaction between the multimedia component 2108 and the processing component 2102.

The memory 2104 is configured to store various types of data to support operations at the UE 2100. Examples of such data include instructions for any application or method operating on the UE 2100, contact data, phonebook data, messages, pictures, videos, etc. The memory 2104 may be implemented by any type of volatile or nonvolatile storage device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk.

The power supply component 2106 provides power to various components of the UE 2100. The power component 2106 may include a power management system, at least one power supply, and other components associated with generating, managing, and distributing power for UE 2100.

The multimedia component 2108 includes a screen providing an output interface between the UE 2100 and the user. In some embodiments, the screen may include a liquid crystal display (LCD) and a touch panel (TP). If the screen includes a touch panel, the screen may be implemented as a touch screen to receive input signals from a user. The touch panel includes at least one touch sensor to sense touch, slide, and gestures on the touch panel. The touch sensor may not only sense a boundary of a touch or slide action, but also detect a wake-up time and pressure related to the touch or slide operation. In some embodiments, the multimedia component 2108 includes a front camera and/or a rear camera. When the UE 2100 is in operation mode, such as shooting mode or video mode, the front camera and/or rear camera may receive external multimedia data. Each front camera and rear camera may be a fixed optical lens system or have focal length and optical zoom capability.

The audio component 2110 is configured to output and/or input audio signals. For example, the audio component 2110 includes a microphone (MIC), which is configured to receive an external audio signal when the UE 2100 is in an operation mode, such as a call mode, a recording mode, and a voice recognition mode. Received audio signals may be further stored in the memory 2104 or sent via the communication component 2116. In some embodiments, the audio component 2110 also includes a speaker for outputting audio signals.

The I/O interface 2112 provides an interface between the processing component 2102 and a peripheral interface module, which may be a keyboard, a click wheel, a button, and the like. These buttons may include, but are not limited to, a home button, volume buttons, start button, and lock button.

The sensor component 2113 includes at least one sensor, which is used to provide various aspects of state assessment for the UE 2100. For example, the sensor component 2113 may detect the open/close state of the UE 2100, the relative positioning of components, such as the display and the keypad of the UE2100. The sensor component 2113 may also detect the position change of the UE 2100 or a component of the UE 2100, the presence or absence of the contact between the UE 2100 and the user, the orientation of the UE 2100 or the acceleration/deceleration and temperature change of the UE 2100. The sensor component 2113 may include a proximity sensor configured to detect the presence of nearby objects in the absence of any physical contact. The sensor component 2113 may also include an optical sensor, such as a CMOS or CCD image sensor, for use in imaging applications. In some embodiments, the sensor component 2113 may also include an acceleration sensor, a gyro sensor, a magnetic sensor, a pressure sensor or a temperature sensor.

The communication component 2116 is configured to facilitate wired or wireless communications between the UE 2100 and other devices. The UE 2100 may access wireless networks based on communication standards, such as WiFi^{™}, 2G or 3G, or their combination. In an embodiment, the communication component 2116 receives a broadcast signal or broadcast related information from an external broadcast management system via a broadcast channel. In an embodiment, the communication component 2116 also includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth^{™} (BT) technology and other technologies.

In any embodiment, the UE 2100 may be implemented by at least one Application Specific Integrated Circuit (ASIC), Digital Signal Processor (DSP), Digital Signal Processing Device (DSPD), Programmable Logic Device (PLD), Field Programmable Gate Array (FPGA), controller, microcontroller, microprocessor or other electronic components for implementing the above method.

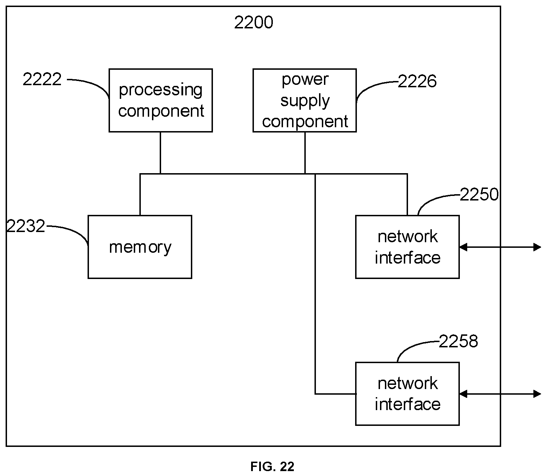

FIG. 22 is a block diagram illustrating a network side device 2200 according to an embodiment of the disclosure. For example, the network side device 2200 may be provided as a network side device. As illustrated in FIG. 22, the network side device 2200 includes a processing component 2211, which further includes at least one processor, and a memory resource represented by a memory 2232 for storing instructions executable by the processing component 2222, such as an application program. The application programs stored in the memory 2232 may include one or more modules each corresponding to a set of instructions. In addition, the processing component 2210 is configured to execute instructions, so as to execute any foregoing method applied to the network side device, for example, the method illustrated in FIG. 1.

The network side device 2200 may also include a power supply component 2226 configured to perform power management of the network side device 2200, a wired or wireless network interface 2250 configured to connect the network side device 2200 to the network, and an input and output (I/O ) interface 2258. The network side device 2200 may operate based on the operating system stored in the memory 2232, such as Windows Server^{™}, Mac OS X^{™}, Unix^{™}, Linux^{™} Free BSD^{™} or similar.

In above embodiments according to the disclosure, the methods according to embodiments of the disclosure are introduced from the perspectives of the network side device and the UE respectively. In order to implement the various functions in the methods according to above embodiments of the disclosure, the network side device and the UE may include a hardware structure and a software module and the above functions are implemented in the form of a hardware structure, a software module, or a hardware structure and a software module. A certain function among the above-mentioned functions may be implemented in the form of a hardware structure, a software module, or a hardware structure and a software module.

In above embodiments according to the disclosure, the methods according to embodiments of the disclosure are introduced from the perspectives of the network side device and the UE respectively. In order to implement the various functions in the methods according to above embodiments of the disclosure, the network side device and the UE may include a hardware structure and a software module and the above functions are implemented in the form of a hardware structure, a software module, or a hardware structure and a software module. A certain function among the above-mentioned functions may be implemented in the form of a hardware structure, a software module, or a hardware structure and a software module.

A communication device is provided according to an embodiment of the disclosure. The communication device may include a transceiver module and a processing module. The transceiver module may include a sending module and/or a receiving module. The sending module is configured to realize the sending function, the receiving module is configured to realize the receiving function, and the transceiver module may realize the sending function and/or the receiving function.

The communication device may be a terminal device (such as the terminal device in foregoing method embodiments), a device in the terminal device, or a device that may be matched and used with the terminal device. Or, the communication device may be a network device, a device in the network device, or a device that may be matched with the network device.

Another communication device is provided according to an embodiment of the disclosure. The communication device may be a network device, a terminal device (such as the terminal device in aforementioned method embodiments), or a chip, a chip system, or a processor that supports the network device to implement above methods. Or the communication device may be a chip, a chip system, or a processor that support a terminal device to realize the above methods. The device can be used to implement the methods described in above method embodiments, which may make reference to the descriptions of above method embodiments for details.

A communications device may include one or more processors. The processor may be a general purpose processor or a special purpose processor or the like. For example, the processor may be a baseband processor or a central processing unit. The baseband processor may be configured to process communication protocols and communication data, and the central processor may be configured to control communication devices (such as network side device, baseband chips, terminal device, chips of the terminal device, DU or CU, etc.) to perform the computer program and process data of the computer program.

The communication device may further include one or more memories, on which computer programs may be stored. The processor may execute the computer programs, to cause the communication device to perform the methods described in foregoing method embodiments. The one or more memories may have data stored thereon. The communication device and the memory may be set separately or integrated together.

The communication device may further include a transceiver and an antenna. The transceiver may be referred to as a transceiver unit, a transceiver, or a transceiver circuit, etc., and is used to implement a transceiver function. The transceiver may include a receiver and a transmitter. The receiver may be called a receiving module or a receiving circuit for realizing a receiving function; and the transmitter may be called a transmitting module or a sending circuit for realizing a sending function.

The communication device may further include one or more interface circuits. The interface circuit is configured to receive code instructions and transmit code instructions to the processor. The processor executes the code instructions to enable the communication device to execute the methods described in foregoing method embodiments.

The communication device is a terminal device (such as the terminal device in foregoing method embodiments) and the processor is configured to execute any of the methods shown in FIGS. 1 to 4.

The communication device is a network device and the transceiver is configured to execute the methods shown in any one of FIGS. 5 to 7.

In one implementation, the processor may include a transceiver for implementing receiving and transmitting functions. For example, the transceiver may be a transceiver circuit, or an interface, or an interface circuit. The transceiver circuits, interfaces or interface circuits for realizing the functions of receiving and sending may be separated or integrated together. The above-mentioned transceiver circuit, interface or interface circuit may be used for reading and writing code/data, or the above-mentioned transceiver circuit, interface or interface circuit may be used for signal transmission or transporting.

In an implementation, the processor may store a computer program, and the computer program runs on the processor to enable the communication device to execute the methods described in foregoing method embodiments. The computer program may be embedded in a processor, in which case the processor may be implemented by hardware.

In an implementation, the communication device may include a circuit, and the circuit may implement the function of sending or receiving or communicating in foregoing method embodiments. The processor and the transceiver described in the disclosure may be implemented on integrated circuit (IC), analog IC, radio frequency integrated circuit (RFIC), mixed-signal IC, application specific integrated circuit (ASIC), printed circuit board (PCB), electronic equipment, etc. The processor and transceiver may also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in above embodiments may be a network device or a terminal device (such as the terminal device in foregoing method embodiments), but the scope of the communication device described in the disclosure is not limited thereto, and the structure of the communication device may not be limited. The communication device may be a stand-alone device or may be part of a larger device. For example the communication device may be the following.
(1) A stand-alone integrated circuits IC, a chip, a chip systems or a subsystem;
(2) A set of one or more ICs. For example, the set of ICs may also include storage components for storing data and computer programs.
(3) An ASIC, such as a modem.
(4) Modules that may be embedded in other devices.
(5) A receiver, a terminal device, an intelligent terminal device, a cellular phones, a wireless device, a handset, a mobile unit, a vehicle device, a network device, a cloud device, an artificial intelligence device, or the like.
(6) Others and so on.

For the case where the communications device may be a chip or system-on-a-chip, the chip includes a processor and an interface. The number of processors may be one or more, and the number of interfaces may be more than one.

The chip also includes a memory, which is used to store necessary computer programs and data.

Those skilled in the art may also understand that various illustrative logical blocks and steps listed in embodiments of the disclosure may be implemented by electronic hardware, computer software, or a combination of both. Whether such functions are implemented by hardware or software depends on the specific application and overall system design requirements. Those skilled in the art may use various methods to implement the described functions for each specific application, but such implementation should not be understood as exceeding the protection scope of embodiments of the disclosure.

An embodiment of the disclosure also provides a system for determining a duration of a sidelink. The system includes a communication device as a terminal device (such as the first terminal device in the method embodiment above) in the foregoing embodiments and a communication device as a network device. Or, the system includes the communication device as the terminal device in the foregoing embodiments (such as the first terminal device in the foregoing method embodiment) and the communication device as a network device.

The disclosure also provides a readable storage medium on which instructions are stored, and when the instructions are executed by a computer, the functions of any one of above method embodiments are realized.

The disclosure also provides a computer program product, which implements the functions of any one of above method embodiments when the computer program product is executed by a computer

In above embodiments, all or part of them may be implemented by software, hardware, firmware or any combination thereof. When implemented using software, it may be implemented in whole or in part in the form of a computer program product. The computer program product comprises one or more computer programs. When the computer program is loaded and executed on the computer, all or part of the processes or functions according to embodiments of the disclosure will be generated. The computer may be a general purpose computer, a special purpose computer, a computer network, or other programmable devices. The computer program may be stored in or transmitted from one computer-readable storage medium to another computer-readable storage medium. For example, the computer program may be transmitted from a website site, computer, server or data center to another website site, computer, server or data center in a wired manner (such as coaxial cable, optical fiber, digital subscriber line (DSL)) or a wireless (such as infrared, wireless, microwave, etc.) manner. The computer-readable storage medium may be any available medium that may be accessed by a computer, or a data storage device such as a server or a data center integrated with one or more available media. The available medium may be a magnetic medium (for example, a floppy disk, a hard disk, a magnetic tape), an optical medium (for example, a high-density digital video disc (DVD)), or a semiconductor medium (for example, a solid state disk (SSD)) etc.

Those of ordinary skill in the art may understand that the "first," "second," and other numbers involved in the disclosure are only for convenience of description, and are not used to limit the scope of embodiments of the disclosure. Or these number also indicate the sequence.

The term "at least one" in the disclosure may also be described as "one or more", and the term "a plurality of" may be two, three, four or more, which is not limited in the disclosure. In embodiments of the disclosure, for a kind of technical features, these technical features may be distinguished from each other by "first", "second", "third", "A", "B", "C" and "D", etc. The technical features defined using the "first", "second", "third", "A", "B", "C" and "D" have no sequence or order of magnitude among the technical features described.

Other embodiments of the disclosure will be readily apparent to those skilled in the art from consideration of the specification and practice of the disclosure described herein. The disclosure is intended to cover any modification, use or adaptation of the disclosure, and these modifications, uses or adaptations follow the general principles of the disclosure and include common knowledge or conventional technical means in the technical field not disclosed in the disclosure. The specification and embodiments are to be considered as examples only, with a true scope and spirit of the disclosure being indicated by the following claims.

It is understandable that the disclosure is not limited to the precise constructions which have been described above and shown in the drawings, and various modifications and changes may be made without departing from the scope thereof. The scope of the disclosure is limited only by the appended claims.

## Claims

1. A model processing method based on a user equipment (UE) capability, performed by a base station, comprising:
sending a request message to a UE, wherein the request message is configured to be used for requesting at least one of UE hardware capability information, real-time UE capability information, or real-time UE requirement information for a model;
obtaining feedback information sent, based on the request message, by the UE, wherein the feedback information comprises information requested by the request message; and
determining a model training scheme and/or a model inference scheme based on the feedback information, to train the model based on the model training scheme and/or perform an inference on the model based on the model inference scheme.

2. The method of claim 1, wherein the UE hardware capability information comprises at least one of:
a number of Central Processing Units (CPUs) of the UE;
a number of Graphics Processing Units (GPUs) of the UE;
a clock rate of a CPU of the UE;
a clock rate of a GPU of the UE;
a cache capacity of the CPU of the UE;
a video memory capacity of the GPU of the UE;
a Tera Operations Per Second (TOPS) of the UE; or
a Floating-point Operations Per Second (FLOPS) of the UE.

3. The method of claim 1, wherein the real-time UE capability information comprises at least one of:
real-time computing power information of the UE; wherein the real-time computing power information of the UE comprises at least one of a real-time memory occupancy rate of the UE, a real-time Central Processing Unit (CPU) occupancy rate of the UE, a real-time Graphics Processing Unit (GPU) occupancy rate of the UE, or a real-time computing speed of the UE; or
real-time energy consumption information of the UE; wherein the real-time energy consumption information of the UE comprises at least one of a remaining quantity of electricity of the UE or an activation status of a power saving mode of the UE.

4. The method of claim 1, wherein the real-time UE requirement information for the model comprises at least one of:
a requirement for a precision of the model;
a requirement for a model inference latency; or
a requirement for privacy of model data, wherein the requirement for the privacy of the model data comprises information on whether the UE is allowed to report the model data of a UE side, and the model data comprises at least one of model training data, model inference data, or model inference intermediate information.

5. The method of claim 1, wherein the request message is configured to be used for requesting the UE hardware capability information; and
wherein sending the request message to the UE comprises:
sending a UE Capability Enquiry message to the UE.

6. The method of claim 5, wherein obtaining the feedback information sent, based on the request message, by the UE comprises:
obtaining UE capability information sent, based on the UE Capability Enquiry message, by the UE, wherein the UE Capability Information comprises the UE hardware capability information.

7. The method of claim 1, wherein the request message is configured to be used for requesting the real-time UE capability information and/or the real-time UE requirement information for the model; and
wherein sending the request message to the UE comprises:
sending an information request message to the UE, wherein the information request message is configured to be used for requesting the UE to report the real-time UE capability information and/or the real-time UE requirement information for the model, and the information request message comprises a reporting mode for the UE.

8. The method of claim 7, wherein obtaining the feedback information sent, based on the request message, by the UE comprises:
obtaining the real-time UE capability information and/or real-time UE requirement information for the model reported, based on the reporting mode, by the UE.

9. The method of claim 8, wherein the reporting mode comprises at least one of:
a periodic reporting;
a semi-persistent reporting; or
a trigger-based reporting.

10. The method of claim 9, further comprising:
sending a reporting period corresponding to the periodic reporting to the UE; and/or
sending a reporting condition corresponding to the semi-persistent reporting to the UE; and/or
sending a trigger condition corresponding to the trigger-based reporting to the UE.

11. The method of claim 8, wherein obtaining the real-time UE capability information and/or the real-time UE requirement information for the model reported, based on the reporting mode, by the UE comprises:
obtaining the real-time UE capability information and/or the real-time UE requirement information for the model incrementally reported, based on the reporting mode, by the UE.

12. The method of claim 8, wherein different information comprised in the UE hardware capability information corresponds to different privacy levels, and/or different information comprised in the real-time UE capability information corresponds to different privacy levels, and/or, different information comprised in the real-time UE requirement information for the model corresponds to different privacy levels; and
wherein obtaining the real-time UE capability information and/or the real-time UE requirement information for the model reported, based on the reporting mode, by the UE comprises:
obtaining information whose privacy level is equal to or lower than a predetermined privacy level among the real-time UE capability information reported, based on the reporting mode, by the UE, and/or information whose privacy level is equal to or lower than the predetermined privacy level among the real-time UE requirement information for the model reported, based on the reporting mode, by the UE; wherein the predetermined privacy level is determined by the UE.

13. The method of claim 8, wherein obtaining the real-time UE capability information and/or the real-time UE requirement information for the model reported, based on the reporting mode, by the UE comprises at least one of:
obtaining the real-time UE capability information and/or the real-time UE requirement information for the model reported, through Radio Resource Control (RRC) signaling, by the UE;
obtaining the real-time UE capability information and/or the real-time UE requirement information for the model reported, through Medium Access Control-Control Element (MAC CE) signaling, by the UE; or
obtaining the real-time UE capability information and/or the real-time UE requirement information for the model reported, through a Physical Uplink Control Channel (PUCCH), by the UE.

14. The method of claim 13, wherein obtaining the real-time UE capability information and/or the real-time UE requirement information for the model reported, through the PUCCH, by the UE comprises:
obtaining a report information list sent by the UE, wherein the report information list is configured to indicate all information that the UE is able to report to the base station among the real-time UE capability information and/or the real-time UE requirement information for the model requested by the base station;
configuring the PUCCH for the UE; and
obtaining, through the PUCCH, the real-time UE capability information and/or the real-time UE requirement information UE for the model sent by the UE.

15. The method of claim 14, wherein configuring the PUCCH for the UE comprises at least one of:
configuring the PUCCH for the UE in a semi-static resource allocation manner; or
configuring the PUCCH for the UE in a dynamic resource allocation manner.

16. The method of claim 1 or 4, wherein determining the model training scheme based on the feedback information comprises:
when the base station determines, based on the feedback information, that a model training capability of the UE is less than a first threshold and a requirement for privacy of model data indicates allowing to report model training data, determining that the model training scheme is training a first model by the base station;
wherein training the first model by the base station comprises:
sending a message for requesting the model training data to the UE;
obtaining the model training data sent by the UE; and
training the first model based on the model training data.

17. The method of claim 1 or 4, wherein determining the model training scheme based on the feedback information comprises:
when the base station determines, based on the feedback information, that a model training capability of the UE is greater than or equal to a first threshold and less than a second threshold, determining that the model training scheme is training a first model by the base station and the UE respectively;
wherein training the first model by the base station and the UE respectively comprises:
obtaining a pre-trained model by pre-training the first model based on local training data of the base station;
sending the pre-trained model to the UE to allow the UE to retrain the pre-trained model; and
obtaining a retrained model and model performance information sent by the UE.

18. The method of claim 1 or 4, wherein determining the model training scheme based on the feedback information comprises:
when the base station determines, based on the feedback information, that a model training capability of the UE is greater than or equal to a second threshold, determining that the model training scheme is training a first model by the UE;
wherein training the first model by the UE comprises:
configuring the first model for the UE, to allow the UE to train the first model; and
obtaining a trained model and model performance information sent by the UE.

19. The method of claim 1 or 4, wherein determining the model inference scheme based on the feedback information comprises:
when the base station determines, based on the feedback information, that a model inference capability of the UE is less than a third threshold and a requirement for privacy of model data indicates allowing to report model inference data, determining that the model inference scheme is performing an inference on a second model by the base station;
wherein performing the inference on the second model by the base station comprises:
determining the second model based on the feedback information;
sending a message for requesting the model inference data to the UE;
obtaining the model inference data sent by the UE;
performing the inference on the second model based on the model inference data; and
sending an inference result to the UE.

20. The method of claim 1 or 4, wherein determining the model inference scheme based on the feedback information comprises:
when the base station determines, based on the feedback information, that a model inference capability of the UE is greater than or equal to a third threshold and less than a fourth threshold and a requirement for privacy of model data indicates allowing to report model inference intermediate information, determining that the model inference scheme is jointly performing a model inference by the base station and the UE;
wherein jointly performing the model inference by the base station and the UE comprises:
determining a second model based on the feedback information, determining a model split point for the second model, and splitting the second model based on the model split point into two sub-model portions;
sending a former sub-model portion of the second model to the UE and/or sending model information of the second model and the model split point to the UE to allow the UE to perform the inference on the former sub-model portion to obtain the model inference intermediate information;
obtaining the model inference intermediate information sent by the UE;
performing the model inference based on the model inference intermediate information and a latter sub-model portion of the second model; and
sending an inference result to the UE.

21. The method of claim 1 or 4, wherein determining the model inference scheme based on the feedback information comprises:
when the base station determines, based on the feedback information, that a model inference capability of the UE is greater than or equal to a fourth threshold, determining that the model inference scheme is performing an inference on a second model by the UE;
wherein performing the inference on the second model by the UE comprises:
determining the second model based on the feedback information; and
sending the second model to the UE to allow the UE to perform the inference of the second model.

22. A model processing method based on a user equipment (UE) capability, performed by a UE, comprising:
obtaining a request message sent by the base station, wherein the request message is configured to be used for requesting at least one of UE hardware capability information, real-time UE capability information, or real-time UE requirement information for a model;
sending feedback information to the base station based on the request message, wherein the feedback information is information requested by the request message.

23. The method of claim 22, wherein the UE hardware capability information comprises at least one of:
a number of Central Processing Units (CPUs) of the UE;
a number of Graphics Processing Units (GPUs) of the UE;
a clock rate of a CPU of the UE;
a clock rate of a GPU of the UE;
a cache capacity of the CPU of the UE;
a video memory capacity of the GPU of the UE;
a Tera Operations Per Second (TOPS) of the UE; or
a Floating-point Operations Per Second (FLOPS) of the UE.

24. The method of claim 22, wherein the real-time UE capability information comprises at least one of:
real-time computing power information of the UE; wherein the real-time computing power information of the UE comprises at least one of a real-time memory occupancy rate of the UE, a real-time Central Processing Unit (CPU) occupancy rate of the UE, a real-time Graphics Processing Unit (GPU) occupancy rate of the UE, or a real-time computing speed of the UE; or
real-time energy consumption information of the UE; wherein the real-time energy consumption information of the UE comprises at least one of a remaining quantity of electricity of the UE or an activation status of a power saving mode of the UE.

25. The method of claim 22, wherein the real-time UE requirement information for the model comprises at least one of:
a requirement for a precision of the model;
a requirement for a model inference latency; or
a requirement for privacy of model data; wherein the requirement for the privacy of the model data comprises information on whether the UE is allowed to report the model data of a UE side, and the model data comprises at least one of model training data, model inference data, or model inference intermediate information.

26. The method of claim 22, wherein the request message is configured to be used for requesting the UE hardware capability information; and
wherein obtaining the request message sent by the base station comprises:
obtaining a UE Capability Enquiry message sent by the base station.

27. The method of claim 26, wherein sending the feedback information to the base station based on the request message comprises:
sending UE Capability Information to the base station, wherein the UE Capability Information comprises the UE hardware capability information.

28. The method of claim 22, wherein the request message is configured to be used for requesting the real-time UE capability information and/or the real-time UE requirement information UE for the model; and
wherein obtaining the request message sent by the base station comprises:
obtaining an information request message sent by the base station, wherein the information request message is configured to be used for requesting the UE to report the real-time UE capability information and/or the real-time UE requirement information for the model, and the information request message comprises a reporting mode for the UE.

29. The method of claim 28, wherein sending the feedback information to the base station based on the request message comprises:
reporting the real-time UE capability information and/or the real-time UE requirement information for the model to the base station based on the reporting mode.

30. The method of claim 29, wherein the reporting mode comprises at least one of:
a periodic reporting;
a semi-persistent reporting; or
a trigger-based reporting.

31. The method of claim 30, further comprising:
sending a reporting period corresponding to the periodic reporting to the UE; and/or
sending a reporting condition corresponding to the semi-persistent reporting to the UE; and/or
sending a trigger condition corresponding to the trigger-based reporting to the UE.

32. The method of claim 29, wherein reporting the real-time UE capability information and/or the real-time UE requirement information for the model to the base station based on the reporting mode comprises:
incrementally reporting the real-time UE capability information and/or real-time UE requirement information for the model to the base station based on the reporting mode.

33. The method of claim 29, wherein different information comprised in the UE hardware capability information corresponds to different privacy levels, and/or different information comprised in the real-time UE capability information corresponds to different privacy levels, and /or different information comprised in the real-time UE requirement information for the model corresponds to different privacy levels; and
wherein reporting the real-time UE capability information and/or the real-time UE requirement information for the model to the base station based on the reporting mode comprises:
determine a predetermined privacy level;
reporting information whose privacy level is equal to or lower than the predetermined privacy level among the real-time UE capability information to the base station based on the reporting mode, and/or reporting information whose privacy level is equal to or lower than the predetermined privacy level among the real-time UE requirement information for the model to the base station based on the reporting mode.

34. The method of claim 29, wherein reporting the real-time UE capability information and/or the real-time UE requirement information to the model to the base station based on the reporting mode comprises at least one of:
reporting the real-time UE capability information and/or the real-time UE requirement information for the model to the base station through Radio Resource Control (RRC) signaling;
reporting the real-time UE capability information and/or the real-time UE requirement information for the model to the base station through Medium Access Control-Control Element (MAC CE) signaling; or
reporting the real-time UE capability information and/or the real-time UE requirement information for the model to the base station through a Physical Uplink Control Channel (PUCCH).

35. The method of claim 34, wherein reporting the real-time UE capability information and/or the real-time UE requirement information for the model to the base station through the PUCCH comprises:
sending a report information list to the base station, wherein the report information list is configured to indicate all information that the UE is able to report to the base station among the real-time UE capability information and/or the real-time UE requirement information for the model requested by the base station;
obtaining the PUCCH configured by the base station; and
sending the real-time UE capability information and/or the real-time UE requirement information for the model to the base station through the PUCCH.

36. The method of claim 35, wherein obtaining the PUCCH configured by the base station comprises at least one of:
obtaining the PUCCH configured by the base station in a semi-static resource allocation manner; or
obtaining the PUCCH configured by the base station in a dynamic resource allocation manner.

37. The method of claim 22 or 25, further comprising:
receiving a message for requesting model training data sent by the base station; and
sending the model training data to the base station.

38. The method of claim 22 or 25, further comprising:
receiving a pre-trained model sent by the base station;
retraining the pre-trained model; and
sending a retrained model and model performance information to the base station.

39. The method of claim 22 or 25, further comprising:
obtaining a first model configured by the base station;
training the first model; and
sending a trained model and model performance information to the base station.

40. The method of claim 22 or 25, further comprising:
obtaining a message for requesting model inference data sent by the base station;
sending model inference data to the base station; and
obtaining an inference result sent by the base station.

41. The method of claim 22 or 25, further comprising:
obtaining a former sub-model portion of a second model sent by the base station, and/or obtaining model information of the second model and a model split point of the second model sent by the base station, and splitting the second model based on the model split point into two sub-model portions;
performing an inference on the former sub-model portion to obtain model inference intermediate information;
sending the model inference intermediate information to the base station; and
obtaining an inference result sent by the base station.

42. The method of claim 22 or 25, further comprising:
obtaining a second model sent by the base station; and
performing an inference on the second model.

43. A model processing apparatus based on a user equipment (UE) capability, comprising:
a sending module, configured to send a request message to the UE, wherein the request message is configured to be used for requesting at least one of UE hardware capability information, real-time UE capability information, or real-time UE requirement information for a model;
an obtaining module, configured to obtain feedback information sent, based on the request message, by the UE, wherein the feedback information comprises information requested by the request message; and
a processing module, configured to determine a model training scheme and/or a model inference scheme based on the feedback information, to train the model based on the model training scheme and/or perform an inference on the model based on the model inference scheme.

44. A model processing apparatus based on a user equipment (UE) capability, comprising:
an obtaining module, configured to obtain a request message sent by the base station, wherein the request message is configured to be used for requesting at least one of UE hardware capability information, real-time UE capability information, or real-time UE requirement information for a model; and
a sending module, configured to send feedback information to the base station based on the request message, wherein the feedback information is information requested by the request message.

45. A communication device, comprising a processor and a memory, wherein the memory has a computer program stored thereon, and when the computer program stored on the memory is executed by the processor, the device is caused to perform the method of any one of claims 1 to 21.

46. A communication device, comprising a processor and a memory, wherein the memory has a computer program stored thereon, and when the computer program stored on the memory is executed by the processor, the device is caused to perform the method of any one of claims 22 to 42.

47. A communication device, comprising: a processor and an interface circuit;
wherein the interface circuit is configured to receive code instructions and transmit the code instructions to the processor; and
the processor is configured to run the code instructions to perform the method of any one of claims 1 to 21.

48. A communication device, comprising: a processor and an interface circuit;
wherein the interface circuit is configured to receive code instructions and transmit the code instructions to the processor; and
the processor is configured to run the code instructions to perform the method of any one of claims 22 to 42.

49. A computer-readable storage medium, having instructions stored thereon, wherein when the instruction are executed, the method of any one of claims 1 to 21 is performed.

50. A computer-readable storage medium, having instructions stored thereon, wherein when the instruction are executed, the method of any one of claims 22 to 42 is performed.
